# EUROPEAN PATENT SPECIFICATION

(11) **EP 4 122 270 B1**
(45) Date of publication and mention of the grant of the patent: **28.05.2025**
(21) Application number: 21793518.8
(22) Date of filing: 21.04.2021
(51) Int. Cl.: H04W 74/00, H04W 24/02, H04W 72/044, H04W 74/0833

(54) **TRANSMISSION METHOD AND DEVICE**
ÜBERTRAGUNGSVERFAHREN UND -VORRICHTUNG
PROCÉDÉ ET DISPOSITIF DE TRANSMISSION

(30) Priority: 22.04.2020 CN 202010322670; 05.02.2021 CN 202110164587
(43) Date of publication of application: 25.01.2023
(73) Proprietor: Samsung Electronics Co., Ltd., Gyeonggi-do 16677 (KR)
(72) Inventor: WANG, Yi, Suwon-si, Gyeonggi-do 16677 (KR); XIONG, Qi, Suwon-si, Gyeonggi-do 16677 (KR); QIAN, Chen, Suwon-si, Gyeonggi-do 16677 (KR)
(74) Representative: Gulde & Partner
(86) International application number: PCT/KR2021/005053
(87) International publication number: WO 2021/215834

(56) References cited:
- WO-A1-2019/082152
- CN-A- 110 475 377
- US-A1- 2018 084 507
- US-A1- 2019 208 550
- US-A1- 2020 059 878
- ZTE: "FL Summary #2 of Channel Structure for 2-step RACH", vol. RAN WG1, no. Chongqing, China; 20191014 - 20191020, 22 October 2019 (2019-10-22), XP051798714, Retrieved from the Internet <URL:https://ftp.3gpp.org/tsg_ran/WG1_RL1/TSGR1_98b/Docs/R1-1911448.zip R1-1911448 FL Summary #2 of Channel Structure for 2-step RACH.docx> [retrieved on 20191022]
- QUALCOMM INCORPORATED: "Channel Structure for Two-Step RACH", vol. RAN WG1, no. Prague, Czech Republic; 20190826 - 20190830, 17 August 2019 (2019-08-17), XP051765844, Retrieved from the Internet <URL:http://www.3gpp.org/ftp/tsg_ran/WG1_RL1/TSGR1_98/Docs/R1-1909239.zip> [retrieved on 20190817]
- VIVO: "Discussion on channel structure for 2-step RACH", vol. RAN WG1, no. Prague, CZ; 20190826 - 20190830, 17 August 2019 (2019-08-17), XP051764753, Retrieved from the Internet <URL:http://www.3gpp.org/ftp/tsg_ran/WG1_RL1/TSGR1_98/Docs/R1-1908134.zip> [retrieved on 20190817]
- VIVO: "Remaining issues on channel structure for 2-step RACH", vol. RAN WG1, no. e-Meeting; 20200224 - 20200306, 14 February 2020 (2020-02-14), XP052343369, Retrieved from the Internet <URL:https://ftp.3gpp.org/tsg_ran/WG1_RL1/TSGR1_100_e/Docs/R1-2000304.zip R1-2000304_Remaining issues on channel structure for 2-step RACH.docx> [retrieved on 20200214]
- ZTE ET AL: "On the remaining issues of msgA channel structure", vol. RAN WG1, no. Prague, CZ; 20190826 - 20190830, 16 August 2019 (2019-08-16), XP051764800, Retrieved from the Internet <URL:http://www.3gpp.org/ftp/tsg_ran/WG1_RL1/TSGR1_98/Docs/R1-1908181.zip> [retrieved on 20190816]

## Description

### [Technical Field]

The present application relates to a wireless communication technical field, and more specifically, to a method for determining transmission resources and a method and device for transmitting uplink and downlink signals associated with random access.

### [Background Art]

In order to meet the increasing demand for wireless data communication services since the deployment of 4G communication systems, efforts have been made to develop improved 5G or pre-5G communication systems. Therefore, 5G or pre-5G communication systems are also called "Beyond 4G networks" or "Post-LTE systems".

In order to achieve a higher data rate, 5G communication systems are implemented in higher frequency (millimeter, mmWave) bands, e.g., 60GHz bands. In order to reduce propagation loss of radio waves and increase a transmission distance, technologies such as beamforming, massive multiple-input multiple-output (MIMO), full-dimensional MIMO (FD-MIMO), array antenna, analog beamforming and large-scale antenna are discussed in 5G communication systems.

In addition, in 5G communication systems, developments of system network improvement are underway based on advanced small cell, cloud radio access network (RAN), ultra-dense network, device-to-device (D2D) communication, wireless backhaul, mobile network, cooperative communication, coordinated multi-points (CoMP), reception-end interference cancellation, etc.

In 5G systems, hybrid FSK and QAM modulation (FQAM) and sliding window superposition coding (SWSC) as advanced coding modulation (ACM), and filter bank multicarrier (FBMC), non-orthogonal multiple access (NOMA) and sparse code multiple access (SCMA) as advanced access technologies have been developed.

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

The following prior art publications concern configuring random access:
- ZTE: "FL Summary #2 of Channel Structure for 2-step RACH", 3GPP DRAFT; R1-1911448,
- QUALCOMM INCORPORATED: "Channel Structure for Two-Step RACH", 3GPP DRAFT; R1-1909239,
- VIVO: "Discussion on channel structure for 2-step RACH", 3GPP DRAFT; R1-1908134, and
- VIVO: "Remaining issues on channel structure for 2-step RACH", 3GPP DRAFT; R1-2000304

### [Disclosure of Invention]

### [Technical Problem]

For a more efficient communication system, there is a need for a method of determining transmission resources and a method of transmitting uplink and downlink signals.

### [Solution to Problem]

The invention is defined by the appended claims. Any aspect, embodiment, example or implementation not claimed, is only presented as information.

### [Advantageous Effects of Invention]

According to the embodiments of the present application, a method of determining transmission resources and a method of transmitting uplink and downlink signals are provided.

### [Brief Description of Drawings]

Through the following description taken in conjunction with the drawings, the above and additional aspects and advantages of the present application will become more apparent and readily comprehensible, in which:
FIG. 1 illustrates an example wireless network according to the present disclosure;
FIG. 2a illustrates an example wireless transmission and reception paths according to the present disclosure;
FIG. 2b illustrates an example wireless transmission and reception paths according to the present disclosure;
FIG. 3a illustrates an example user equipment (UE) according to the present disclosure;
FIG. 3b illustrates an example base station according to the present disclosure;
Fig. 4 illustrates a flowchart of a method performed by a UE according to an embodiment of the present application;
FIG. 5a illustrates an example of RO in a first-type cell-common UL/DL period P;
FIG. 5b illustrates an example of RO in a first-type cell-common UL/DL period P;
FIG. 6a illustrates an example of RO in a second-type cell-common UL/DL period P;
FIG. 6b illustrates an example of RO in a second-type cell-common UL/DL period P;
FIG. 7a illustrates another example of RO in the second-type cell-common UL/DL period P;
FIG. 7b illustrates another example of RO in the second-type cell-common UL/DL period P;
FIG. 8 illustrates another example of RO in the second-type cell-common UL/DL period P;
FIG. 9a illustrates an example of RO in the second-type cell-common UL/DL period P;
FIG. 9b illustrates an example of RO in the second-type cell-common UL/DL period P;
FIG. 10 illustrates examples of first-type valid transmission occasions and second-type transmission occasion;
FIG. 11 illustrates an example of two beam groups;
FIG. 12 illustrates another example of two beam groups;
FIG. 13 illustrates another example of two beam groups.
FIG. 14 illustrates a UE according to the present disclosure; and
FIG. 15 illustrates a base station according to the present disclosure.

### [Mode for the Invention]

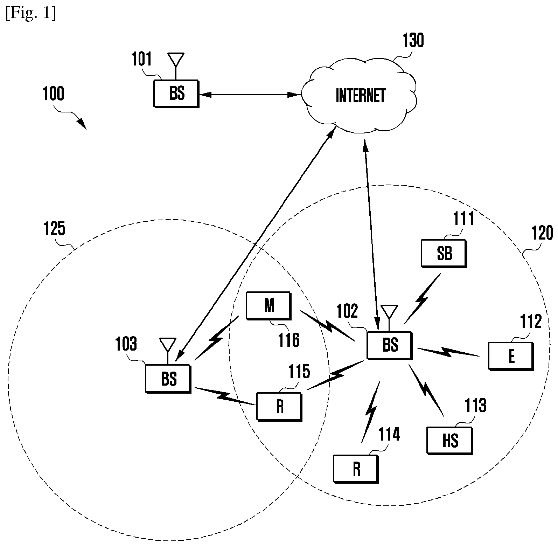

FIG. 1 illustrates an example wireless network 100 according to various embodiments of the present disclosure. The embodiment of the wireless network 100 shown in FIG. 1 is for illustration only. Other embodiments of the wireless network 100 can be used without departing from the scope of the present disclosure.

The wireless network 100 includes a gNodeB (gNB) 101, a gNB 102, and a gNB 103. GNB 101 communicates with gNB 102 and gNB 103. GNB 101 also communicates with at least one Internet Protocol (IP) network 130, such as the Internet, a private IP network, or other data networks.

Depending on a type of the network, other well-known terms such as "base station" or "access point" can be used instead of "gNodeB" or "gNB". For convenience, the terms "gNodeB" and "gNB" are used in this patent document to refer to network infrastructure components that provide wireless access for remote terminals. And, depending on the type of the network, other well-known terms such as "mobile station", "user station", "remote terminal", "wireless terminal" or "user apparatus" can be used instead of "user equipment" or "UE". For convenience, the terms "user equipment" and "UE" are used in this patent document to refer to remote wireless devices that wirelessly access the gNB, no matter whether the UE is a mobile device (such as a mobile phone or a smart phone) or a fixed device (such as a desktop computer or a vending machine).

gNB 102 provides wireless broadband access to the network 130 for a first plurality of User Equipments (UEs) within a coverage area 120 of gNB 102. The first plurality of UEs include a UE 111, which may be located in a Small Business (SB); a UE 112, which may be located in an enterprise (E); a UE 113, which may be located in a WiFi Hotspot (HS); a UE 114, which may be located in a first residence (R); a UE 115, which may be located in a second residence (R); a UE 116, which may be a mobile device (M), such as a cellular phone, a wireless laptop computer, a wireless PDA, etc. GNB 103 provides wireless broadband access to network 130 for a second plurality of UEs within a coverage area 125 of gNB 103. The second plurality of UEs include a UE 115 and a UE 116. In some embodiments, one or more of gNBs 101-103 can communicate with each other and with UEs 111-116 using 6G, 5G, Long Term Evolution (LTE), LTE-A, WiMAX or other advanced wireless communication technologies.

The dashed lines show approximate ranges of the coverage areas 120 and 125, and the ranges are shown as approximate circles merely for illustration and explanation purposes. It should be clearly understood that the coverage areas associated with the gNBs, such as the coverage areas 120 and 125, may have other shapes, including irregular shapes, depending on configurations of the gNBs and changes in the radio environment associated with natural obstacles and man-made obstacles.

As will be described in more detail below, one or more of gNB 101, gNB 102, and gNB 103 include a 2D antenna array as described in embodiments of the present disclosure. In some embodiments, one or more of gNB 101, gNB 102, and gNB 103 support codebook designs and structures for systems with 2D antenna arrays.

Although FIG. 1 illustrates an example of the wireless network 100, various changes can be made to FIG. 1. The wireless network 100 can include any number of gNBs and any number of UEs in any suitable arrangement, for example. Furthermore, gNB 101 can directly communicate with any number of UEs and provide wireless broadband access to the network 130 for those UEs. Similarly, each gNB 102-103 can directly communicate with the network 130 and provide direct wireless broadband access to the network 130 for the UEs. In addition, gNB 101, 102 and/or 103 can provide access to other or additional external networks, such as external telephone networks or other types of data networks.

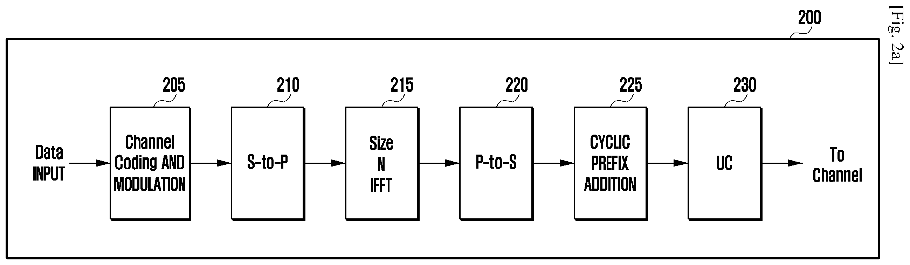

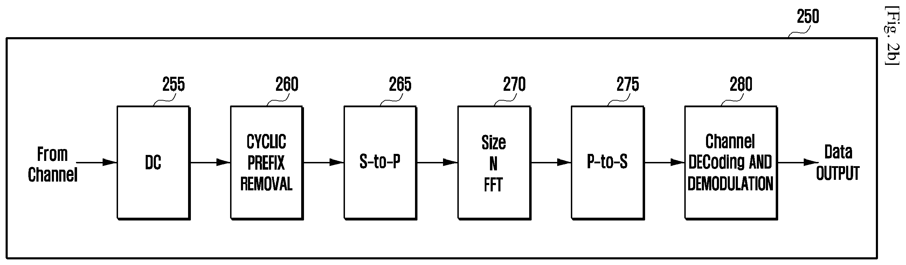

FIGs. 2a and 2b illustrate example wireless transmission and reception paths according to the present disclosure. In the following description, the transmission path 200 can be described as being implemented in a gNB, such as gNB 102, and the reception path 250 can be described as being implemented in a UE, such as UE 116. However, it should be understood that the reception path 250 can be implemented in a gNB and the transmission path 200 can be implemented in a UE. In some embodiments, the reception path 250 is configured to support codebook designs and structures for systems with 2D antenna arrays as described in embodiments of the present disclosure.

The transmission path 200 includes a channel coding and modulation block 205, a Serial-to-Parallel (S-to-P) block 210, a size N Inverse Fast Fourier Transform (IFFT) block 215, a Parallel-to-Serial (P-to-S) block 220, a cyclic prefix addition block 225, and an up-converter (UC) 230. The reception path 250 includes a down-converter (DC) 255, a cyclic prefix removal block 260, a Serial-to-Parallel (S-to-P) block 265, a size N Fast Fourier Transform (FFT) block 270, a Parallel-to-Serial (P-to-S) block 275, and a channel decoding and demodulation block 280.

In the transmission path 200, the channel coding and modulation block 205 receives a set of information bits, applies coding (such as Low Density Parity Check (LDPC) coding), and modulates the input bits (such as using Quadrature Phase Shift Keying (QPSK) or Quadrature Amplitude Modulation (QAM)) to generate a sequence of frequency-domain modulated symbols. The Serial-to-Parallel (S-to-P) block 210 converts (such as demultiplexes) serial modulated symbols into parallel data to generate N parallel symbol streams, where N is a size of the IFFT/FFT used in gNB 102 and UE 116. The size N IFFT block 215 performs IFFT operations on the N parallel symbol streams to generate a time-domain output signal. The Parallel-to-Serial block 220 converts (such as multiplexes) parallel time-domain output symbols from the Size N IFFT block 215 to generate a serial time-domain signal. The cyclic prefix addition block 225 inserts a cyclic prefix into the time-domain signal. The up-converter 230 modulates (such as up-converts) the output of the cyclic prefix addition block 225 to an RF frequency for transmission via a wireless channel. The signal can also be filtered at a baseband before switching to the RF frequency.

The RF signal transmitted from gNB 102 arrives at UE 116 after passing through the wireless channel, and operations in reverse to those at gNB 102 are performed at UE 116. The down-converter 255 down-converts the received signal to a baseband frequency, and the cyclic prefix removal block 260 removes the cyclic prefix to generate a serial time-domain baseband signal. The Serial-to-Parallel block 265 converts the time-domain baseband signal into a parallel time-domain signal. The Size N FFT block 270 performs an FFT algorithm to generate N parallel frequency-domain signals. The Parallel-to-Serial block 275 converts the parallel frequency-domain signal into a sequence of modulated data symbols. The channel decoding and demodulation block 280 demodulates and decodes the modulated symbols to recover the original input data stream.

Each of gNBs 101-103 may implement a transmission path 200 similar to that for transmitting to UEs 111-116 in the downlink, and may implement a reception path 250 similar to that for receiving from UEs 111-116 in the uplink. Similarly, each of UEs 111-116 may implement a transmission path 200 for transmitting to gNBs 101-103 in the uplink, and may implement a reception path 250 for receiving from gNBs 101-103 in the downlink.

Each of the components in FIGs. 2a and 2b can be implemented using only hardware, or using a combination of hardware and software/firmware. As a specific example, at least some of the components in FIGs. 2a and 2b may be implemented in software, while other components may be implemented in configurable hardware or a combination of software and configurable hardware. For example, the FFT block 270 and IFFT block 215 may be implemented as configurable software algorithms, in which the value of the size N may be modified according to the implementation.

Furthermore, although described as using FFT and IFFT, this is only illustrative and should not be interpreted as limiting the scope of the present disclosure. Other types of transforms can be used, such as Discrete Fourier transform (DFT) and Inverse Discrete Fourier Transform (IDFT) functions. It should be understood that for DFT and IDFT functions, the value of variable N may be any integer (such as 1, 2, 3, 4, etc.), while for FFT and IFFT functions, the value of variable N may be any integer which is a power of 2 (such as 1, 2, 4, 8, 16, etc.).

Although FIGs. 2a and 2b illustrate examples of wireless transmission and reception paths, various changes may be made to FIGs. 2a and 2b. For example, various components in FIGs. 2a and 2b can be combined, further subdivided or omitted, and additional components can be added according to specific requirements. Furthermore, FIGs. 2a and 2b are intended to illustrate examples of types of transmission and reception paths that can be used in a wireless network. Any other suitable architecture can be used to support wireless communication in a wireless network.

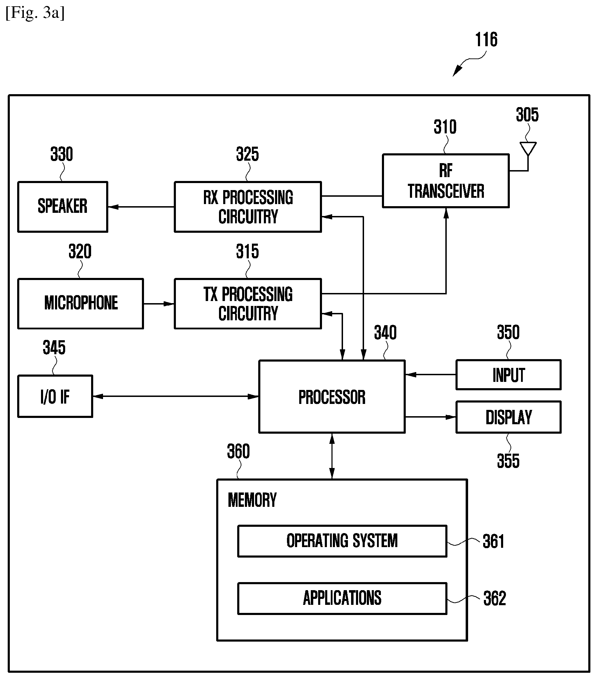

FIG. 3a illustrates an example UE 116 according to the present disclosure. The embodiment of UE 116 shown in FIG. 3a is for illustration only, and UEs 111-115 of FIG. 1 can have the same or similar configuration. However, a UE has various configurations, and FIG. 3a does not limit the scope of the present disclosure to any specific implementation of the UE.

UE 116 includes an antenna 305, a radio frequency (RF) transceiver 310, a transmission (TX) processing circuit 315, a microphone 320, and a reception (RX) processing circuit 325. UE 116 also includes a speaker 330, a processor/controller 340, an input/output (I/O) interface 345, an input device(s) 350, a display 355, and a memory 360. The memory 360 includes an operating system (OS) 361 and one or more applications 362.

The RF transceiver 310 receives an incoming RF signal transmitted by a gNB of the wireless network 100 from the antenna 305. The RF transceiver 310 down-converts the incoming RF signal to generate an intermediate frequency (IF) or baseband signal. The IF or baseband signal is transmitted to the RX processing circuit 325, where the RX processing circuit 325 generates a processed baseband signal by filtering, decoding and/or digitizing the baseband or IF signal. The RX processing circuit 325 transmits the processed baseband signal to speaker 330 (such as for voice data) or to processor/controller 340 for further processing (such as for web browsing data).

The TX processing circuit 315 receives analog or digital voice data from microphone 320 or other outgoing baseband data (such as network data, email or interactive video game data) from processor/controller 340. The TX processing circuit 315 encodes, multiplexes, and/or digitizes the outgoing baseband data to generate a processed baseband or IF signal. The RF transceiver 310 receives the outgoing processed baseband or IF signal from the TX processing circuit 315 and up-converts the baseband or IF signal into an RF signal transmitted via the antenna 305.

The processor/controller 340 can include one or more processors or other processing devices and execute an OS 361 stored in the memory 360 in order to control the overall operation of UE 116. For example, the processor/controller 340 can control the reception of forward channel signals and the transmission of backward channel signals through the RF transceiver 310, the RX processing circuit 325 and the TX processing circuit 315 according to well-known principles. In some embodiments, the processor/controller 340 includes at least one microprocessor or microcontroller.

The processor/controller 340 is also capable of executing other processes and programs residing in the memory 360, such as operations for channel quality measurement and reporting for systems with 2D antenna arrays as described in embodiments of the present disclosure. The processor/controller 340 can move data into or out of the memory 360 as required by an execution process. In some embodiments, the processor/controller 340 is configured to execute the application 362 based on the OS 361 or in response to signals received from the gNB or the operator. The processor/controller 340 is also coupled to an I/O interface 345, where the I/O interface 345 provides UE 116 with the ability to connect to other devices such as laptop computers and handheld computers. I/O interface 345 is a communication path between these accessories and the processor/controller 340.

The processor/controller 340 is also coupled to the input device(s) 350 and the display 355. An operator of UE 116 can input data into UE 116 using the input device(s) 350. The display 355 may be a liquid crystal display or other display capable of presenting text and/or at least limited graphics (such as from a website). The memory 360 is coupled to the processor/controller 340. A part of the memory 360 can include a random access memory (RAM), while another part of the memory 360 can include a flash memory or other read-only memory (ROM).

Although FIG. 3a illustrates an example of UE 116, various changes can be made to FIG. 3a. For example, various components in FIG. 3a can be combined, further subdivided or omitted, and additional components can be added according to specific requirements. As a specific example, the processor/controller 340 can be divided into a plurality of processors, such as one or more central processing units (CPUs) and one or more graphics processing units (GPUs). Furthermore, although FIG. 3a illustrates that the UE 116 is configured as a mobile phone or a smart phone, UEs can be configured to operate as other types of mobile or fixed devices.

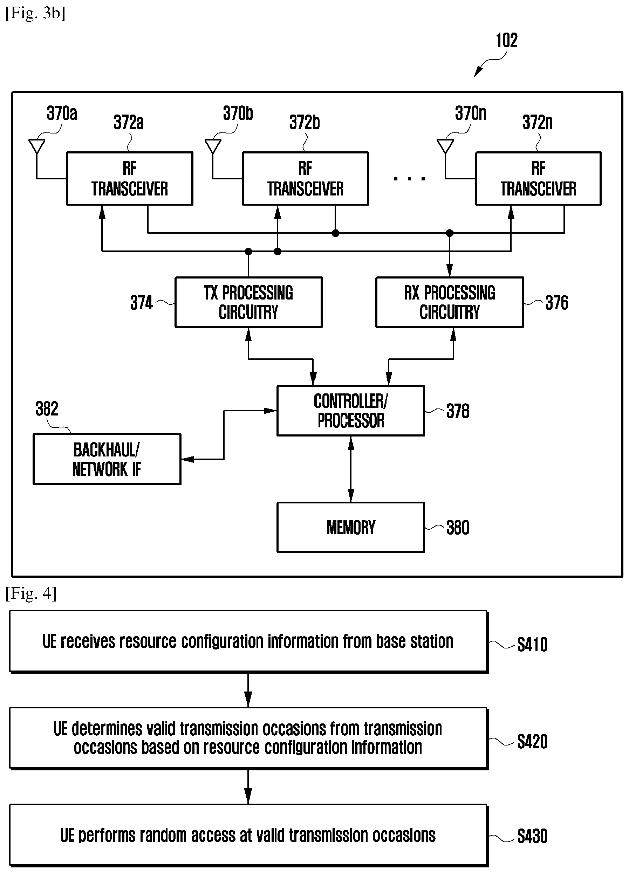

FIG. 3b illustrates an example gNB 102 according to the present disclosure. The embodiment of gNB 102 shown in FIG. 3b is for illustration only, and other gNBs of FIG. 1 can have the same or similar configuration. However, a gNB has various configurations, and FIG. 3b does not limit the scope of the present disclosure to any specific implementation of a gNB. It should be noted that gNB 101 and gNB 103 can include the same or similar structures as gNB 102.

As shown in FIG. 3b, gNB 102 includes a plurality of antennas 370a-370n, a plurality of RF transceivers 372a-372n, a transmission (TX) processing circuit 374, and a reception (RX) processing circuit 376. In certain embodiments, one or more of the plurality of antennas 370a-370n include a 2D antenna array. GNB 102 also includes a controller/processor 378, a memory 380, and a backhaul or network interface 382.

RF transceivers 372a-372n receive an incoming RF signal from antennas 370a-370n, such as a signal transmitted by UEs or other gNBs. RF transceivers 372a-372n downconvert the incoming RF signal to generate an IF or baseband signal. The IF or baseband signal is transmitted to the RX processing circuit 376, where the RX processing circuit 376 generates a processed baseband signal by filtering, decoding and/or digitizing the baseband or IF signal. RX processing circuit 376 transmits the processed baseband signal to controller/processor 378 for further processing.

The TX processing circuit 374 receives analog or digital data (such as voice data, network data, email or interactive video game data) from the controller/processor 378. TX processing circuit 374 encodes, multiplexes and/or digitizes outgoing baseband data to generate a processed baseband or IF signal. RF transceivers 372a-372n receive the outgoing processed baseband or IF signal from TX processing circuit 374 and up-convert the baseband or IF signal into an RF signal transmitted via antennas 370a-370n.

The controller/processor 378 can include one or more processors or other processing devices that control the overall operation of gNB 102. For example, the controller/processor 378 can control the reception of forward channel signals and the transmission of backward channel signals through the RF transceivers 372a-372n, the RX processing circuit 376 and the TX processing circuit 374 according to well-known principles. The controller/processor 378 can also support additional functions, such as higher-level wireless communication functions. For example, the controller/processor 378 can perform a Blind Interference Sensing (BIS) process such as that performed through a BIS algorithm, and decode a received signal from which an interference signal is subtracted. A controller/processor 378 may support any of a variety of other functions in gNB 102. In some embodiments, the controller/processor 378 includes at least one microprocessor or microcontroller.

The controller/processor 378 is also capable of executing programs and other processes residing in the memory 380, such as a basic OS. The controller/processor 378 can also support channel quality measurement and reporting for systems with 2D antenna arrays as described in embodiments of the present disclosure. In some embodiments, the controller/processor 378 supports communication between entities such as web RTCs. The controller/processor 378 can move data into or out of the memory 380 as required by an execution process.

The controller/processor 378 is also coupled to the backhaul or network interface 382. The backhaul or network interface 382 allows gNB 102 to communicate with other devices or systems through a backhaul connection or through a network. The backhaul or network interface 382 can support communication over any suitable wired or wireless connection(s). For example, when gNB 102 is implemented as a part of a cellular communication system, such as a cellular communication system supporting 6G or 5G or new radio access technology or NR, LTE or LTE-A, the backhaul or network interface 382 can allow gNB 102 to communicate with other gNBs through wired or wireless backhaul connections. When gNB 102 is implemented as an access point, the backhaul or network interface 382 can allow gNB 102 to communicate with a larger network, such as the Internet, through a wired or wireless local area network or through a wired or wireless connection. The backhaul or network interface 382 includes any suitable structure that supports communication through a wired or wireless connection, such as an Ethernet or an RF transceiver.

The memory 380 is coupled to the controller/processor 378. A part of the memory 380 can include an RAM, while another part of the memory 380 can include a flash memory or other ROMs. In certain embodiments, a plurality of instructions, such as the BIS algorithm, are stored in the memory. The plurality of instructions are configured to cause the controller/processor 378 to execute the BIS process and decode the received signal after subtracting at least one interference signal determined by the BIS algorithm.

As will be described in more detail below, the transmission and reception paths of gNB 102 (implemented using RF transceivers 372a-372n, TX processing circuit 374 and/or RX processing circuit 376) support aggregated communication with FDD cells and TDD cells.

Although FIG. 3b illustrates an example of gNB 102, various changes may be made to FIG. 3b. For example, gNB 102 can include any number of each component shown in FIG. 3a. As a specific example, the access point can include many backhaul or network interfaces 382, and the controller/processor 378 can support routing functions to route data between different network addresses. As another specific example, although shown as including a single instance of the TX processing circuit 374 and a single instance of the RX processing circuit 376, gNB 102 can include multiple instances of each (such as one for each RF transceiver).

The exemplary embodiments of the present disclosure are further described below in conjunction with the accompanying drawings.

The text and drawings are provided as examples only to help readers understand the present disclosure. Although certain embodiments and examples have been provided, based on the content disclosed herein, it is obvious to those skilled in the art that modifications to the illustrated embodiments and examples can be made without departing from the scope of the present disclosure.

Existing communication systems are usually divided into time division duplex (TDD) and frequency division duplex (FDD) systems. In the TDD system, the base station can configure uplink and downlink attributes (that is, uplink transmission slots/symbols, downlink transmission slots/symbols, and flexible slots/symbols) in different time resources on a carrier through semi-static signaling and dynamic signaling. In the FDD system, the base station can respectively configure a pair of uplink and downlink carriers, so that different time resources in the uplink carrier are uplink transmission slots/symbols or flexible slots/symbols, and different time resources in the downlink carrier are downlink transmission slots/symbols or flexible slots/symbols.

Compared with the FDD system, in the TDD system, since the uplink transmission and downlink transmission are time division multiplexed, a delay of the uplink transmission or downlink transmission is relatively large. For example, according to an uplink and downlink configuration, in a 10ms (millisecond) period, only slots of 1ms are for uplink transmission, other slots are for downlink transmission or flexible transmission, so that the maximum delay of uplink transmission is 10ms. In order to reduce the transmission delay, it can be considered that part of the frequency-domain resources in one carrier is divided for uplink transmission, and the other part of the resources is divided for downlink transmission. In order to reduce the mutual influence of uplink transmission and downlink transmission in a same carrier, uplink and downlink interferences can be reduced by way of guard interval and filtering and so like. Further, it can be considered that part of the frequency-domain resources in one carrier is used for both uplink transmission and downlink transmission, thereby improving resource utilization.

The exemplary embodiment of the present application proposes to improve the existing resource allocation and transmission method of uplink and downlink signals based on a new uplink and downlink transmission mode, thereby improving system efficiency.

In the TDD system, the base station can indicate that a slot or symbol is an uplink symbol, or a downlink symbol, or a flexible transmission symbol, and the UE determines the uplink and downlink transmission direction of each symbol/slot of a carrier/serving cell according to the indication information. Generally, in a same symbol of a carrier/serving cell, only one transmission direction is supported, that is, uplink or downlink transmission, so the base station only needs to indicate the uplink and downlink transmission direction in the time dimension. The base station may indicate periodically, for example, indicate the periodic slot configuration (Slot Configuration) through higher-layer signaling or indicate a slot format within a time period through dynamic signaling. The uplink and downlink attribute of each frequency-domain resource in each slot/symbol is determined through the slot configuration/format: being used for uplink transmission, being used for downlink transmission, or being used for flexible transmission. A flexible slot/symbol may be used for uplink transmission or downlink transmission, but can only be used for transmission of one direction among them at a certain time. In the FDD system, for an uplink carrier/serving cell, the base station may indicate uplink or flexible transmission symbols/slots, and for a downlink carrier/serving cell, the base station may indicate downlink or flexible transmission symbols/slots. The first-type cell-common UL/DL information can include information on uplink and downlink attributes in the time dimension. The first-type cell-common UL/DL information can be used to indicate the period, which slots/symbols in the period are uplink, downlink or flexible slots/symbols, and the indicated uplink and downlink attributes is applicable to all frequency-domain resources in respective slot/symbol of each cell, that is, all frequency-domain resources in the bandwidth of the carrier/serving cell have the same uplink and downlink attributes in one slot/symbol.

In order to allocate the uplink and downlink transmission resources more efficiently, a granularity of the uplink and downlink transmission resources can be further reduced from one symbol/slot to partial frequency-domain resources in one symbol/slot by second-type configuration information, that is, different frequency-domain resources in one symbol of one carrier/serving cell can be allocated for different transmission directions. The second-type configuration information includes second-type cell-common UL/DL information and UE-specific UL/DL information. The second-type cell-common UL/DL information may include information on the uplink and downlink attributes in the time dimension and frequency-domain dimension, and the second-type cell-common UL/DL information may be used to indicate which frequency-domain resources of which slots/symbols are uplink, downlink, or flexible transmission resources. Alternatively, the second-type common UL/DL information can be used to indicate which frequency-domain resources of which slots/symbols are resources for uplink, resources for downlink, or resources that cannot be used for transmission. Further, for the same time and frequency resources, the base station can also allocate uplink and downlink transmissions at the same time to realize full duplex multiplexing. The base station may also configure the user-specific UL/DL information, for example, configure user-specific UL/DL information for each serving cell of the UE, or configure user-specific UL/DL information for each BWP of the UE. According to the configured user-specific UL/DL information, the UE can determine that within one symbol, some resources are uplink transmission resources, and some resources are downlink transmission resources.

In a wireless communication system, before the radio resource control is established, the UE needs to perform an initial access process, which usually includes reception of downlink synchronization signal and broadcast information/system information, and a random access procedure. The base station periodically transmits synchronization signals and broadcast channels to users through synchronization signal blocks (SSBs, synchronization signal /PBCH blocks), and the period is a synchronization signal block period (SSB periodicity, SSB period), or may be called a synchronization signal block group period (SSB burst periodicity). The base station configures for the UE transmission occasions for random access through system information. For example, in the system information, the base station will configure resource information on at least one signal among PRACH, Msg A PRACH, and Msg A PUSCH in the random access procedure. The resource information includes information on transmission occasions of the signal. The information on the transmission occasions includes at least one information in time dimension, frequency-domain dimension, code-domain dimension, and spatial dimension, such as time period information on PRACH and/or PUSCH, a number of PRACH transmission occasions (RACH occasions, ROs) and/or PUSCH transmission occasions (PUSCH occasions, POs) in one period, a number of POs/ROs in the frequency-domain, a number of SSBs corresponding to one PO/RO, a mapping period, etc. Through reasonable configuration, within one time period, each SSB can be mapped to a corresponding RO/PO.

In addition, after the RRC connection is established, the UE also needs to perform the random access procedure under certain conditions, for example, when the UE needs to re-establish uplink synchronization with the cell, or the UE requests uplink scheduling, or the UE reports a beam failure request, etc, the UE also needs to perform the random access procedure. The UE may perform the random access procedure based on random access resources configured by the system information, or the UE may perform the random access procedure through random access resources configured through user-specific signaling or particular cell-common/user group-common signaling, for example, transmission occasions for the random access. In an implementation, after the UE establishes an RRC connection, the base station can configure transmission occasions ROs and/or POs for the user through RRC signaling, for example, configure UE-specific RACH resources through RACH-ConfigDedicated. For the UEs that have not received the configuration information, valid transmission occasions ROs/POs are determined in the way of determining valid transmission occasions ROs/POs according to the first-type cell-common UL/DL information, and for the UEs that have received the configuration information, the valid transmission occasions ROs/POs are determined in the way of determining valid transmission occasions ROs/POs according to the second-type cell-common UL/DL information. And, if the UEs that have received the user-specific UL/DL information, the UE can determine the valid transmission occasions ROs/POs based on the received user-specific UL/DL information.

FIG. 4 illustrates a flowchart of a method performed by a UE according to an embodiment of the present application.

In operation S410, the UE receives resource configuration information from the base station. In operation S420, the UE determines valid transmission occasions from among transmission occasions based on the resource configuration information. In operation S430, the UE performs random access at the valid transmission occasions.

A transmission occasion is at least one of a RO and a PO. For example, according to an implementation, a transmission occasion is a RO. According to an implementation, A transmission occasion is a RO and a PO.

During the random access procedure, the UE needs to determine not only ROs, but also valid ROs that can be used for a PRACH transmission according to predefined rules, before transmitting the PRACH. If the UE is configured with the first-type cell-common UL/DL information (also called first-type configuration information), then the rules for determining the valid ROs can include at least one of the following methods:
- If the RO is within uplink symbols determined according to the first-type cell-common UL/DL information, then the RO is valid.
- If the RO does not precede a SSB in a PRACH slot, and starts at least Ngap symbols after a last SSB symbol and starts at least Ngap symbols after a last downlink symbol determined according to the first-type cell-common UL/DL information, then the RO is valid.

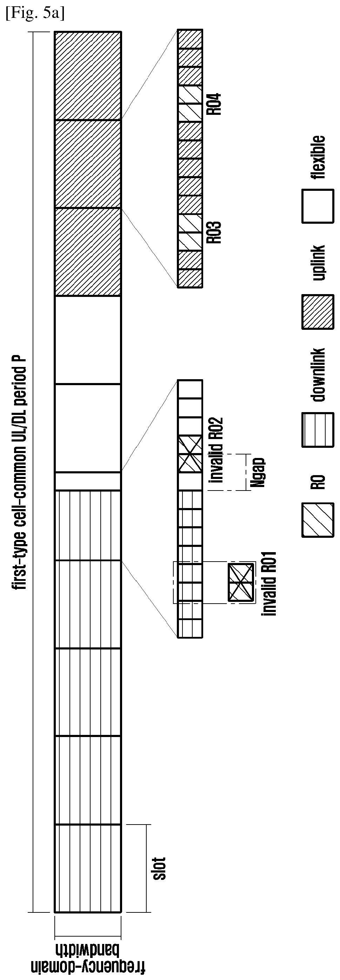

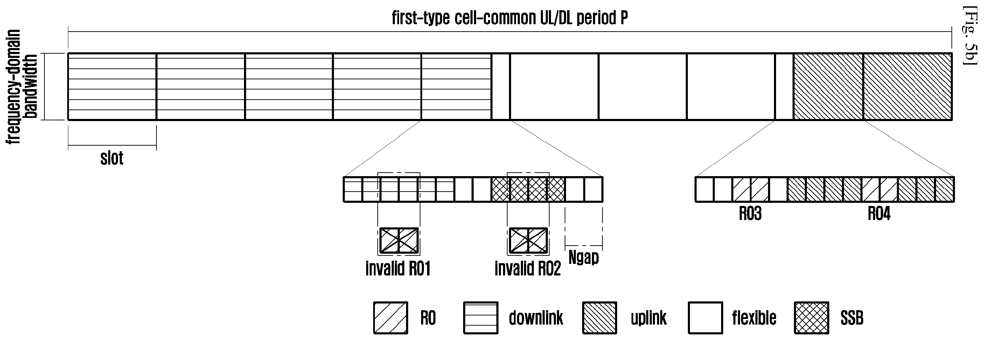

FIGs. 5a and 5b illustrate an example of RO in a first-type cell-common UL/DL period P.

For example, assuming that Ngap=2, in FIG. 5a, RO1 overlaps with downlink symbols, so it is invalid, and RO2 is located in flexible symbols, but a distance between a starting point of the RO2 and an ending position of the last downlink symbol in the slot is smaller than Ngap, so RO2 is invalid. RO3 and RO4 are located in the uplink symbols, so they are valid. For another example, in FIG. 5b, RO1 overlaps with downlink symbols, so it is invalid, and RO2 is located in flexible symbols, but RO2 overlaps with SSBs, so it is invalid. RO3 is located in the flexible symbols, and there is no downlink symbol in the slot where RO3 is, so RO3 is valid. RO4 is located in uplink symbols, so RO4 is valid.

If the UE transmits both a PRACH and a PUSCH in a first step of the random access procedure, then the UE also needs to determine PUSCH transmission occasions (POs) before transmitting the PUSCH, and determine valid POs which can be used for transmission of the PUSCH, according to predefined rules. Valid POs cannot overlap with ROs in time and frequency-domain resources. If the UE is configured with the first-type cell-common UL/DL information, the rules may also include at least one of the following methods:
- If the PO is within uplink symbols determined by the first-type cell-common UL/DL information, then the PO is valid.
- If the PO does not precede a SSB in the PUSCH slot, and starts at least Ngap symbols after a last SSB symbol, and starts at least Ngap symbols after a last downlink symbol determined according to the first-type cell-common UL/DL information in the PUSCH slot, then the PO is valid.

The determination method of valid POs is similar to the determination method of valid ROs, therefore, in order to avoid redundancy, the description by way of examples is not given by here.

According to the claimed implementation, if the UE is configured with the second-type configuration information, then the UE determines the valid transmission occasions according to the second-type configuration information based on the predefined rules. In the following, the second-type cell-common UL/DL information is used as an example of the second-type configuration information to describe an exemplary implementation of the present application, but it should be understood that the embodiments of the present application are also applicable to the case where the second-type configuration information is the user-specific UL/DL information.

If the UE is configured with the second-type cell-common UL/DL information, it may occur that in certain slots/symbols, some frequency-domain resources are indicated as available for uplink transmission, and some other frequency-domain resources are indicated as available for downlink transmission, that is, a symbol contains both uplink transmission resources and downlink transmission resources. In order to make full use of these transmission resources in the random access, one can determine which ROs are valid according to predefined rules. According to an implementation, the predefined rules are predetermined; according to another implementation, the predefined rules are indicated to the UE by the base station through, for example, semi-static signaling or dynamic signaling.

The predefined rules involve one or more of the following factors: whether a distance between resources where an RO is located and a frequency-domain boundary of downlink transmission resources is greater than a first frequency-domain threshold; whether a distance between resources where the RO is located and a frequency-domain boundary of the downlink transmission resources for transmitting specific downlink signals is greater than a second frequency-domain threshold; whether the resources where the RO is located are within a time-domain guard interval between the uplink and downlink transmission resources; whether the resources where the RO is located are in a frequency-domain guard interval between the uplink and downlink transmission resources; and whether the resources where the RO is located are uplink transmission resources, flexible transmission resources, or downlink transmission resources.

According to an implementation, the predefined rules can include:
- If the RO is within the uplink transmission resources determined according to the second-type cell-common UL/DL information, then the RO is valid.
- If the RO is within the flexible transmission resources determined according to the second-type cell-common UL/DL information, and the RO starts or ends at least NPRB1 PRBs beyond from the frequency-domain boundary of the downlink transmission resources determined according to the second-type cell-common UL/DL information (that is, the distance between frequency-domain resources where the RO is located and the frequency-domain boundary of the downlink transmission resources is greater than a first frequency-domain threshold NPRB1), and the RO starts or ends at least NPRB2 PRBs beyond from the frequency-domain boundary of the downlink transmission resources transmitting the first-type downlink signals (that is, the distance between resources where the RO is located and the frequency-domain boundary of the downlink transmission resources for transmitting specific downlink signals is greater than a second frequency-domain threshold NPRB2), then the RO is valid.

In order to control the interference between uplink and downlink, uplink signal transmission should be avoided on downlink transmission resources. In addition, in order to further reduce the interference between adjacent uplink and downlink signals in frequency domain, it is necessary to limit that the uplink signals cannot be transmitted either within a certain frequency-domain guard interval G1 (NPRB1 PRBs) outside the boundary of the downlink transmission resources.

In addition, there may be some downlink signals located in the flexible transmission resources. For the convenience of description, these downlink signals are called first-type downlink signals. In order to control the interference between uplink and downlink, the uplink signals cannot be transmitted on the frequency-domain resources of the first-type downlink signals, or within a certain frequency-domain guard interval G2 (NPRB2 PRBs) outside the boundary of the frequency-domain resources.

The frequency-domain guard interval G1 (first frequency-domain threshold) and the frequency-domain guard interval G2 (second frequency-domain threshold) may be predetermined; or may be determined by the base station and notified to the UE through, for example, semi-static signaling or dynamic signaling.

According to an implementation, the first-type downlink signal are SS/PBCH Blocks, for example, SS/PBCH Blocks determined according to ssb-PositionInBurst indicated in the system information. According to an implementation, the first-type downlink signals are a search space of PDCCHs used for system message reception, for example, CORESET 0 according to the Type0-PDCCH common search space indicated in the system information.

According to an implementation, G2 is determined according to a boundary of a carrier bandwidth and a frequency-domain boundary of the first-type downlink signals, so as to realize that an RO in the symbols where the first-type downlink signals are located is invalid. According to another implementation, G2=0, so as to realize that an RO that overlaps with the frequency-domain resources of the first-type downlink signals in the symbols where the first-type downlink signals are located is invalid.

G1 and G2 can be configured separately. For example, better protection of the first-type downlink signals can be achieved by configuring a larger G2. Alternatively, G1 may be as same as G2.

According to an implementation, when the resources for the first-type downlink signals are all located in downlink transmission resources, and G1 is as same as G2, if the RO is within flexible transmission resources determined according to the second-type cell-common UL/DL information, and the RO starts or ends NPRB PRBs beyond from the frequency-domain boundary of the downlink transmission resources determined according to the second-type cell-common UL/DL information, then the RO is valid.

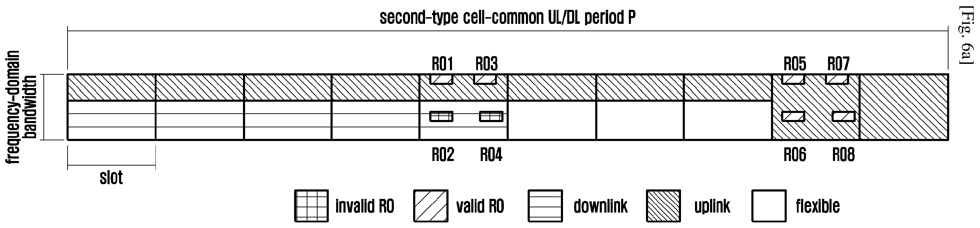

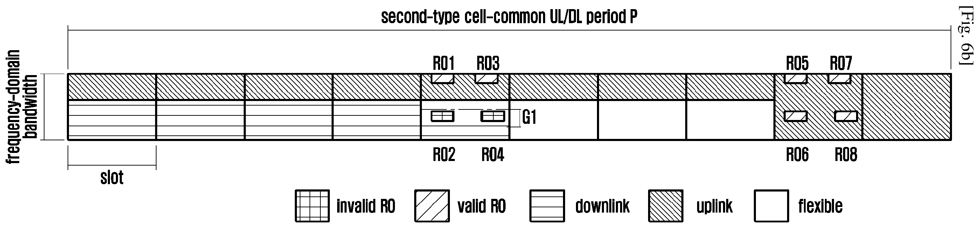

FIGs. 6a and 6b illustrate an example of RO in a second-type cell-common UL/DL period P.

As illustrated in FIG. 6a, RO1, RO3, ROs 5~8 are located in uplink transmission resources, so that they are valid ROs. RO2 and RO4 are located in downlink transmission resources, so that they are invalid ROs. As illustrated in FIG. 6b, RO1, RO 3, ROs 5~8 are located in uplink transmission resources, so that they are valid RO. RO2 and RO4 are located in flexible transmission resources, but a distance between their boundaries of frequency-domain resources and the boundary of the downlink transmission resources is smaller than G1, then RO2 and RO4 are invalid ROs.

In an implementation, in order to further reduce uplink and downlink interference, even if an RO is located in the uplink transmission resources, it should be satisfied that a distance between the RO and the frequency-domain boundary of the downlink transmission resources and/or the resources for the first-type downlink signals is not smaller than G1 and/or G2, that is, if the RO is beyond NPRB1 PRBs from the frequency-domain boundary of the downlink transmission resources determined according to the second-type cell-common UL/DL information and the RO is beyond NPRB2 PRBs from the frequency-domain boundary of the downlink transmission resources transmitting the first-type downlink signals, then the RO is valid.

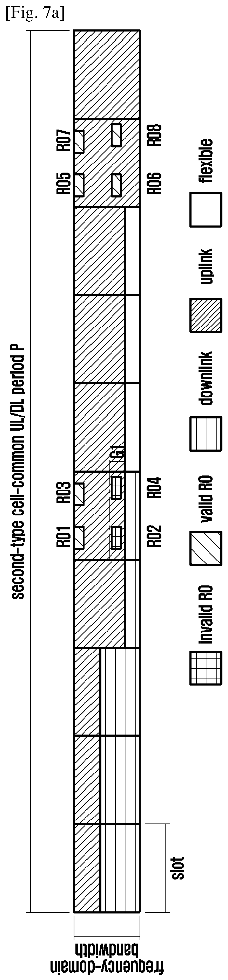

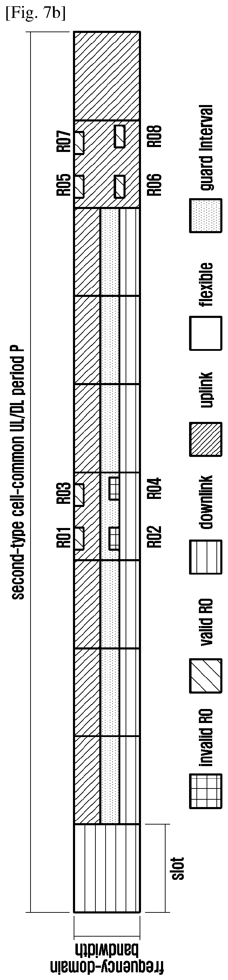

FIGs. 7a and 7b illustrate another example of RO in asecond-type cell-common UL/DL period P.

As illustrated in FIG. 7a, ROs 5~8 are located in the uplink transmission resources and there are no downlink transmission resources in symbols where the ROs 5~8 are located, so that they are valid ROs. RO2 and RO4 are located in the uplink transmission resources, but distances between their frequency-domain resource boundaries and the boundary of the downlink transmission resources is smaller than G1, so that RO2 and RO4 are invalid ROs. RO1 and RO3 are located in the uplink transmission resources, and distances between their frequency-domain resource boundaries and the boundary of the downlink transmission resources is greater than G1, so that they are valid ROs.

According to an implementation, if the base station can configure frequency-domain guard intervals between uplink and downlink transmission resources, if an RO is located in a frequency-domain guard interval, then the RO is invalid. As illustrated in FIG. 7b, RO2 and RO4 are located in the frequency-domain guard intervals, so that they are invalid ROs.

In some systems, the base station or UE can better handle the uplink and downlink interference. Therefore, the uplink signal can be allowed to be transmitted in the downlink transmission resources. For example, in a full-duplex multiplexing system, transmitting and receiving can be performed at the same time on the same time and frequency resources. However, in order to protect specific signals, it is still necessary to limit that there's no transmission of signals in the reverse direction on the frequency-domain resources of these important signals. For example, a specific signal is a SS/PBCH Block, or CORESET 0 of Type-0 CSS. Then, if the RO is beyond NPRB2 PRBs from the frequency-domain boundary of the downlink transmission resources transmitting the specific signal, then the RO is valid.

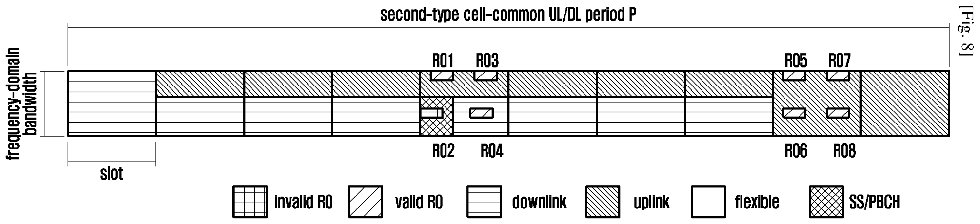

FIG. 8 illustrates another example of RO in the second-type cell-common UL/DL period P.

As illustrated in FIG. 8, RO2 and RO4 are located in the downlink transmission resources, where RO2 overlaps with SS/PBCH resources, so it is an invalid RO. Although RO4 is located in the downlink transmission resources, it does not overlap with the SS/PBCH resources, so it is a valid RO.

When the frequency-domain resources in the adjacent time resources change, usually the base station side or the UE side needs a certain switch time to make adjustments. During this time period, the base station or the UE may not be able to perform normal signal transmission. When determining whether the RO is valid, the determination can be conducted in connection with the above-described predefined rules and whether the RO overlaps with the switch time gap. According to an implementation, the UE can determine a guard period according to a location where the uplink and downlink transmission resources change according to a predefined time length Ngap1. For example, it is assumed that a time length of Ngap1 before the location where the uplink and downlink transmission resources change is a guard period, or it is assumed that a time length of Ngap1 after the location where the uplink and downlink transmission resources change is a guard period. If an RO overlaps with the guard period, regardless of whether the RO is within the uplink transmission resources, the RO is invalid. For example, it is possible to determine which ROs are valid according to at least one of the following predefined rules:
- If the RO is within the uplink transmission resources determined according to the second-type cell-common UL/DL information and does not overlap with the guard time period, then the RO is valid.
- If the RO is within the flexible transmission resources determined according to the second-type cell-common UL/DL information, and the RO starts or ends NPRB 1 PRBs beyond the frequency-domain boundary of the downlink transmission resources determined according to the second-type cell-common UL/DL information, and the RO starts or ends NPRB2 PRBs beyond the frequency-domain boundary of the downlink transmission resources of the first-type downlink signals, and does not overlap with the guard period, then the RO is valid.

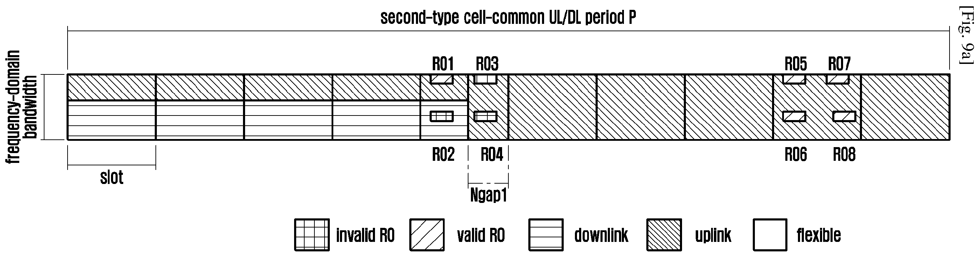

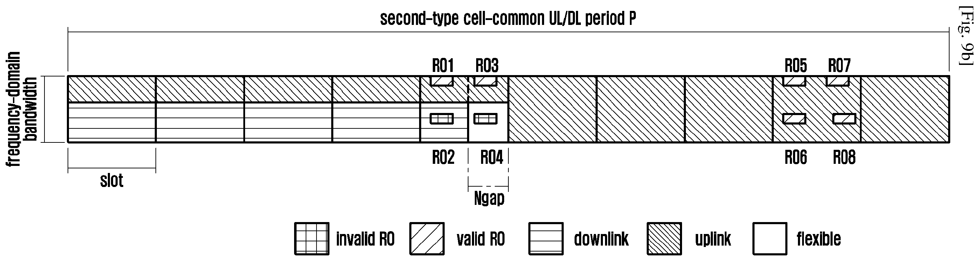

FIGs. 9a and 9b illustrate an example of RO in the second-type cell-common UL/DL period P.

As illustrated in FIG. 9a, in the slots where RO1~RO4 are located, a ratio of uplink transmission resources to downlink transmission resources changes. Although RO1, RO3 and RO4 are all located in the uplink transmission resources, since the resources of RO3 and RO4 are located in the guard period, RO3 and RO4 are invalid.

According to another implementation, the base station needs to ensure that none of the uplink or downlink transmission resources is located in guard period when configuring the uplink and downlink transmission resources. In this case, if an RO is located in the uplink transmission resources, there is no need to check whether it is located in the guard period, but if an RO is located in the flexible transmission resources, it is still necessary to check whether it is located in the guard period. For example, it is possible to determine which ROs are valid according to at least one of the following predefined rules:
- If the RO is located in the uplink transmission resources determined according to second-type cell-common UL/DL information, then the RO is valid.
- If the RO is located in the flexible transmission resources determined according to the second-type cell-common UL/DL information, and the RO is beyond NPRB1 PRBs from the frequency-domain boundary of the downlink transmission resources determined according to the second-type cell-common UL/DL information, and the RO is beyond NPRB2 PRBs from the frequency-domain boundary of the downlink transmission resources of the first-type downlink signals, and is not located in the guard period , then the RO is valid.

As illustrated in FIG. 9b, in the slots where RO1~RO4 are located, a ratio of uplink transmission resources to downlink transmission resources changes. RO1 and RO3 are located in the uplink transmission resources, so RO1 and RO3 are valid. RO4 is located in the flexible transmission resources, and the resources of RO4 are located in the guard period, so RO4 is invalid.

If the UE transmits both a PRACH and a PUSCH in the first step in random access procedure, the UE determines valid POs according to the method of determining valid ROs.

Since the determination method of valid POs is as same as the determination method of valid ROs, in order to avoid redundancy, it will not be described here.

When there are some UEs (first-type UEs) that can only read the first-type cell-common UL/DL information, and some UEs (second-type UEs) that can read both the first-type cell-common UL/DL information and the second-type cell-common UL/DL information in a system, valid transmission occasions ROs and/or POs these two types of UEs can observe may be different. Valid transmission occasions ROs and/or POs determined according to the first-type cell-common UL/DL information are the first-type valid transmission occasions ROs and/or POs, and the symbols where the first-type valid transmission occasions are located contain only the uplink transmission resources or the flexible transmission resources. Valid transmission occasions ROs and/or POs determined according to the second-type cell-common UL/DL information or the first-type and second-type cell-common UL/DL information include the first-type valid transmission occasions ROs and/or POs and the second-type valid transmission occasions ROs and/or POs, and the symbols where the second-type valid transmission occasions are located contain both the uplink transmission resources and the flexible transmission resources or the downlink transmission resources. According to an implementation, a first-type UE may determine the first-type valid transmission occasions ROs and/or POs, and a second-type UE may determine the first-type valid transmission occasions ROs and/or POs and the second-type transmission occasions ROs and/or POs.

According to an implementation, the first-type and second-type valid transmission occasions ROs and/or POs are treated as two independent sets of valid transmission occasions ROs and/or POs respectively.

According to an implementation, the base station can configure RACH-ConfigCommon and RACH-ConfigGeneric for these two types of transmission occasions ROs and/or POs respectively.

According to an implementation, the UE determines the association between ROs and/or POs and SSBs for these two types of transmission occasions respectively. The base station can configure a number of SSBs corresponding to a transmission occasion RO and/or PO for these two types of transmission occasions ROs and/or POs respectively.

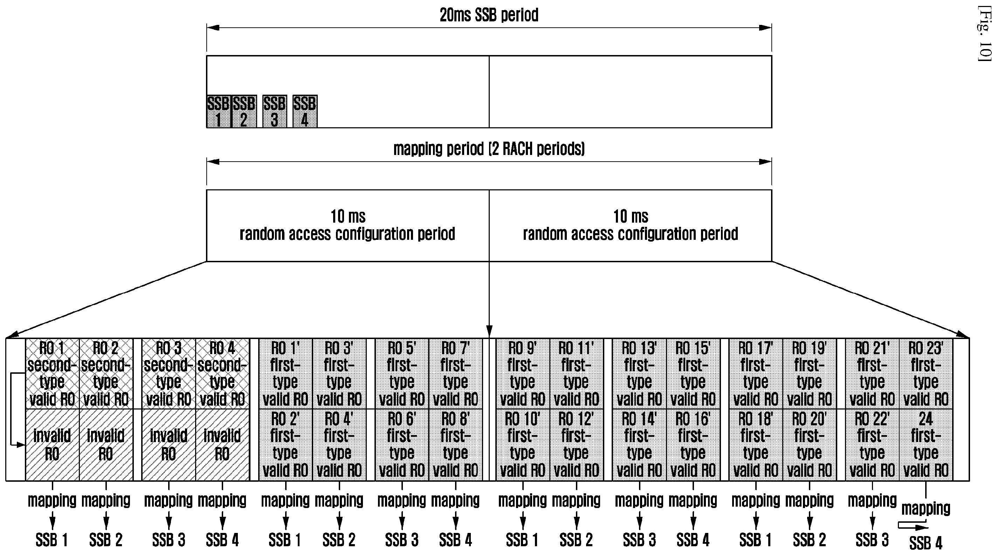

FIG. 10 illustrates an example of the first-type transmission occasions and the second-type transmission occasions. As illustrated in FIG. 10, the first 8 ROs (the first 4 in the time dimension * 2 in the frequency-domain dimension) overlap with the SSB symbols, so they do not belong to the first-type transmission occasions valid ROs, and the remaining 24 ROs belong to the first-type transmission occasions valid ROs. 4 ROs (RO1, RO2, RO3, RO4) among the first 8 ROs are located in areas that do not overlap with the frequency-domain of the SSBs, and therefore belong to the second-type transmission occasions valid ROs. Assuming that the base station configures a number of 2 and a number of 1 of SSBs corresponding to one RO for the first-type and second-type transmission occasions ROs respectively. Therefore, in the second-type transmission occasion valid ROs, each RO corresponds to one SSB, and the four ROs correspond to SSB1, 2, 3, 4 respectively. In the first-type valid transmission occasions valid ROs, every 2 ROs correspond to one SSB, and the 24 ROs correspond to SSB1, SSB1, SSB2, SSB2, SSB3, SSB3, SSB4, SSB4, SSB1, SSB1... and so on.

According to an implementation, the base station can configure random access preambles (Preamble) for these two types of valid transmission occasions ROs and/or POs respectively. According to an implementation, the base station can configure corresponding RA-RNTI offset values for the two types of valid transmission occasions ROs and/or POs respectively. According to an implementation, the base station can configure corresponding RAR search spaces for the two types of valid transmission occasions ROs and/or POs respectively.

According to an implementation, the base station can configure PRACH power control parameters for the two types of valid transmission occasions valid ROs and/or POs respectively, for example, configure PPRACH, target respectively, and/or configure maximum transmit power respectively, and/or configure path loss compensation factors respectively. For example, when a symbol includes both uplink transmission resources and downlink transmission resources, in order to reduce the influence on the downlink signals, compared to the case where only uplink transmission resources are included in a symbol, the power of PRACH should be set relatively small to reduce the influence of PRACH on a downlink signal in the same symbol. For another example, when a symbol includes both uplink transmission resources and downlink transmission resources, in order to reduce the influence of a downlink signal on an uplink signal, compared to the case where only uplink transmission resources are included in one symbol, the power of PRACH should be set relatively large, to ensure the reception performance of the PRACH.

According to an implementation, when the UE chooses to transmit in one type of valid ROs and/or POs, the UE can only retransmit in resources for this type of valid ROs and/or POs.

According to an implementation, when the UE chooses to transmit in one type of valid ROs and/or POs, the UE can choose to retransmit in resources for another type of valid ROs and/or POs, for example, when the UE chooses to transmit in first-type valid ROs and/or POs, the UE can choose to retransmit in resources for second-type valid ROs and/or POs, and vice versa. According to an implementation, a counter in the random access procedure, such as a power increase counter, count separately in the two types of ROs and/or POs. According to another implementation, for the counters in the random access procedure, the two types of ROs and/or POs share a same counter. When ROs and/or POs change, the counter counts continuously.

According to an implementation, according to whether the user can read the second-type cell-common UL/DL information or whether the user can read other information indicating uplink and downlink configuration information on different frequency-domain resources in a symbol, it can be determined whether the UE can perform random access based on the second-type valid transmission ROs and/or POs. For example, if the user can only read the first-type cell-common UL/DL information, the UE cannot perform random access based on the second-type valid transmission ROs and/or POs. If the user can read the second-type cell-common UL/DL information, then the UE can perform random access based on the second-type valid transmission ROs and/or POs in addition to the first-type valid transmission ROs and/or POs determined according to the first-type cell-common UL/DL information.

According to an implementation, UE reports whether it has the capability to perform random access based on the second-type valid transmission ROs and/or POs. For UEs with the capability to perform random access based on the second-type valid transmission ROs and/or POs, the UE can perform random access based on the second-type valid transmission ROs and/or POs, alternatively, for UEs with the capability to perform random access based on the second-type valid transmission ROs and/or POs, the UE determines whether it can perform random access based on the second-type valid transmission ROs and/or POs according to configuration by the base station. The base station may indicate whether random access can be performed based on the second-type valid transmission ROs and/or POs through user-specific signaling or common signaling. For UEs with the capability to perform random access based on the second-type valid transmission ROs and/or POs, they can also perform random access based on the first-type valid transmission ROs and/or POs. For UEs that do not have or do not report the capability to perform random access based on the second-type transmission ROs and/or POs, they perform random access based on only the first-type transmission ROs and/or POs.

According to an implementation, for random access procedures triggered by different conditions, the resource configuration information used to determine the valid transmission occasions ROs/POs of the random access resources are different, and the methods of determining the valid transmission occasions ROs and/or POs are different. According to an implementation, as described above, the UE receives resource configuration information through system information during the initial access procedure, and determines the valid transmission occasion ROs/POs according to the various implementations described above. According to another implementation, for example, after the UE establishes a RRC connection, the base station can configure transmission occasions ROs and/or POs for the user through RRC signaling, for example, configure UE-specific RACH resources through RACH-ConfigDedicated. For a UE that has not received the configuration information, the valid transmission occasions RO/POs are determined according to method of determining the valid transmission occasions ROs/POs according to the first-type cell-common UL/DL information, and for a UE that has received the configuration information, the valid transmission occasions RO/POs are determined according to method of determining the valid transmission occasions ROs/POs according to the second-type cell-common UL/DL information. In addition, the base station may also configure user-specific UL/DL information, for example, configure user-specific UL/DL information for each serving cell of the UE, or configure user-specific UL/DL information for each BWP of the UE. If the UE can determine that in one symbol, some resources are uplink transmission resources and some resources are downlink transmission resources according to the class configuration information, then the UE can also determine the valid transmission occasion ROs/POs according to the method of determining the valid transmission occasions ROs/POs according to the second-type cell-common UL/DL information, except that the second-type cell-common UL/DL information is replaced with the user-specific UL/DL information.

In the above disclosure of the present application, a PRACH and a PUSCH are taken as examples to show an exemplary embodiment in which part of frequency-domain resources in one carrier are used for both uplink transmission and downlink transmission, thereby improving the resource utilization. However, the present application is not limited thereto. For example, the existing resource allocation and transmission method of the uplink and downlink signals based on the new uplink and downlink transmission method proposed in the present application can also be applied to a PUCCH.

Similar to the random accessed PRACH and PUSCH, when PUCCH is located in a symbol with only one transmission direction and located in a symbol with both uplink transmission resources and downlink transmission resources, the interference received by PUCCH or the interference caused by PUCCH to other signals is different. Similarly, when a distance between the PUCCH resources and downlink transmission resources is different, the interference received by the PUCCH or the interference caused by the PUCCH to other signals is different. Additionally, in different symbols, when a number of PRBs available for uplink transmission is different, preferable PUCCH frequency-domain resource parameters are different.

The base station can configure a plurality of sets of PUCCH parameters for different interference situations. For example, the base station may configure a plurality of sets of PUCCH parameters including at least one of the following parameters:
- PUCCH power control parameters
- PUCCH-FormatConfig, including a number of PUCCH repetitions, PUCCH modulation scheme, maximum coding rate of PUCCH, DMRS pattern, etc.
- maximum coding rate of PUCCH, such as PUCCH-MaxCodeRate
- PUCCH resource set, such as PUCCH-ResourceSet
- PUCCH frequency-domain resources, e.g., a starting point of PRBs of PUCCH resources, a starting point of PRBs for frequency-hopping

The base station indicates which set of PUCCH parameters to use through signaling, or the UE determines which set of PUCCH parameters to use according to time-frequency resource configuration information. The time-frequency resource configuration information includes at least one of uplink and downlink configuration information in the dimension of time and frequency domains, and frequency-domain guard period configuration information. Correspondence between the time-frequency resource configuration information and PUCCH parameters is predefined by specification or configured by the base station. Preferably, a first set of PUCCH parameters is applicable to symbols that only contain uplink transmission resources, and a second set of PUCCH parameters is applicable to symbols that contain both uplink transmission resources and downlink transmission resources.

For example, through a PDCCH that scheduling a PDSCH, the base station indicates which set of PUCCH parameters to use for a PUCCH for HARQ-ACKs of the PDSCH. For another example, the base station indicates which set of PUCCH parameters to use through a specific PDCCH. Preferably, the specific PDCCH is a user-specific PDCCH, or a user group-specific PDCCH, or a cell-specific PDCCH. For example, the PDCCH is DCI format 2_0, and the base station indicates which set of PUCCH parameters to use in the PDCCH.

For example, the UE determines PUCCH parameters corresponding to the time-frequency resource configuration through the time-frequency resource configuration information indicated by the base station. For example, the UE determines PUCCH parameters corresponding to the indicated configuration information, through time-frequency resource information dynamically indicated by the base station, such as UL/DL configuration information in the dimension of time and frequency domains indicated by DCI format 2_0. For example, the UE determines that a slot where the PUCCH is located only contains uplink transmission resources or contains both uplink transmission resources and downlink transmission resources through the second-type cell-common UL/DL information and/or the second-type user-specific UL/DL information, so as to determine which set of PUCCH parameters to use. For another example, the UE determines that a PUCCH located in a specific frequency-domain area range uses one set of PUCCH parameters, and a PUCCH located in another frequency-domain area range uses another set of PUCCH parameters, through the second-type cell-common UL/DL information and/or the second-type user-specific UL/DL information, or through the frequency-domain guard interval.

Preferably, after the UE receives indication information for determining the PUCCH parameters, the PUCCH parameters are used until the UE receives another indication information for determining the PUCCH parameters. Preferably, the UE switches to a predefined set of PUCCH parameters according predefined rules. For example, after the UE receives indication information for the first set of PUCCH parameters, it starts a timer. When the timer expires, if the UE has not received another indication information for determining the PUCCH parameters, it switches to a predefined set of PUCCH parameters.

Similarly, the base station configures a plurality of sets of offset parameters used to control transmitting UCIs on PUSCHs, for example, UCI-OnPUSCH. The base station can configure a plurality of sets of β_offsets and/or scaling factors to control the number of resources used for UCI transmission on the PUSCHs. The base station indicates which set of β_offset parameters to use through signaling, or the UE determines which set of β_offset parameters to use through the uplink and downlink configuration information. For example, the UE determines that a slot where the PUSCHs carrying UCIs are located only contains uplink transmission resources or contains both uplink transmission resources and downlink transmission resources through the second-type cell-common UL/DL information and/or the second-type user-specific UL/DL information, so as to determine which set of β_offset parameters to use.

Similarly, the base station configures multiple sets of configured grant PUSCH (CG PUSCH) parameters. Similarly, the base station configures multiple sets of reference signal parameters, for example, SRSs, or CSI-RSs, or phase tracking reference signals (PTRSs), or tracking reference signals (TRSs). How to determine which set of parameters to use could be found in the description of the PUCCH above, which will not be repeated here. With the development of advanced antenna technology, a base station or a UE can support multiple beam directions. Depending on the capabilities of the base station or the UE, the base station or the UE can transmit at multiple beam directions at the same time, or transmit at different beam directions at different time. For each beam direction, the base station can allocate same uplink and downlink transmission resources or different uplink and downlink transmission resources to achieve more flexible allocation of uplink and downlink transmission resources. In this case, the base station can add beam information (for example, transmission configuration information (Transmission Configuration Indicator, TCI)) into the first-type or second-type cell-common UL/DL information, to indicate the beam information. The transmission methods of the valid transmission occasions ROs/POs and PUCCHs in the above embodiments of the present application are applicable to the situation of one beam/beam group, but the inventive concept is not limited thereto, and the inventive concept is also applicable to the situation of multiple beams/beam groups.

In the case of multiple beam directions, the UE determines each beam in one beam group according to predefined rules or according to configuration by the base station. If the spatial isolation of different beam groups is good, then transmissions in reverse directions on the same or adjacent time and frequency resources will not cause too much uplink and downlink interference.

According to an implementation, in a same beam group, the resources containing SS/PBCH Blocks or containing CORESET 0 of Type-0 PDCCH CSS can only be configured as downlink transmission resources, but for different beam groups, SS/PBCH Blocks or resources containing CORESET 0 of Type-0 PDCCH CSS of a beam group A may be configured as uplink transmission resources for another beam group B or can be configured as resources for specific uplink signal transmission of the other beam group B, or SS/PBCH Blocks or resources that are G3 PRBs away from the frequency resources containing CORESET 0 of Type-0 PDCCH CSS of the beam group A can be configured as uplink transmission resources for the other beam group B or can be configured as resources for specific uplink signal transmission of the other beam group B. For example, they may be configured by the first-type or second-type UL/DL configuration information of the other beam group B as uplink transmission resources, or they may be configured by the dynamic UL/DL configuration information of the other beam group B as uplink transmission resources, or they may be scheduled for uplink transmission of the other beam group B by dynamic scheduling signaling of the beam group B. Within a same beam group, resource configured for downlink transmission cannot be configured as the resource for uplink transmission or the resource for specific uplink signal transmission, but for different beam groups, downlink transmission resources of the beam group A can be configured as uplink transmission resources for the other beam group B or can be configured as resource for specific uplink signal transmission for the other beam group B, or resources that are G4 PRBs away from the frequency-domain resources for downlink transmission of the beam group A can be configured as resources for uplink transmission for the other beam group B or can be configured as resources for specific uplink signal transmission for the other beam group B.

According to an implementation, the valid transmission occasions ROs/POs and PUCCH transmission methods described above are not only applicable to operations within one beam group, but also applicable to operations among different beam groups, but different methods can be used.

According to an implementation, determination of transmission resources valid ROs /POs in a beam group determines, according to the first-type cell-common UL/DL information or the second-type cell-common UL/DL information of the beam group, that in a same beam group, a case where valid ROs/POs overlap with downlink transmission resources or downlink signals (such as SSs/PBCHs) of this beam group in time resources and frequency-domain resources does not occur.

According to an implementation, a case where uplink and downlink transmission resources overlap may occur among different beam groups. For example, the valid transmission occasions ROs/POs of one beam group can overlap with the SSBs or downlink resources of another beam group in both time and frequency-domain. For another example, the valid transmission occasions ROs/POs of one beam group may overlap with SSBs or downlink resources of another beam group in time, but not in the frequency-domain resource. In this case, the valid transmission occasions ROs/POs among beam groups are determined according to the second-type configuration information.

According to an implementation, one beam group contains only one beam direction, for example, same TCI information. According to another implementation, one beam group contains only one or more beam directions, for example, one or more TCI information.

According to an implementation, uplink and downlink configuration information of each beam within a beam group is the same. For example, uplink and downlink information is configured in units of beam groups, or uplink and downlink information is configured in units of beams, but configuration information of multiple beams of a beam group is the same.

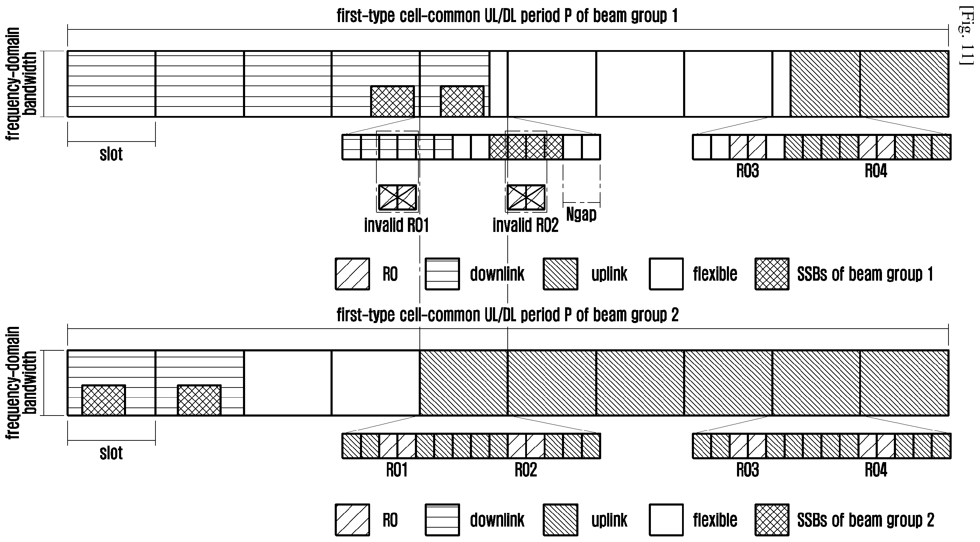

FIG. 11 illustrates an example of two beam groups. Assuming that a cell supports four beam directions, where beams 1~2 are one beam group, and beams 3~4 are another beam group, that is, each beam group includes two beams. Each beam direction corresponds to one SSB respectively, and each beam group has 2 SSBs. These two beam groups are configured with the first-type cell-common UL/DL information. For a beam group, whether a RO is valid is determined according to the first-type cell-common UL/DL information of the beam group. For RO 1/RO2 of beam group 2, although they overlap with the DL/SSB resources of the beam group 1, since they are located in the UL resources of the beam group 2, RO1/RO2 of the beam group 2 are valid ROs.

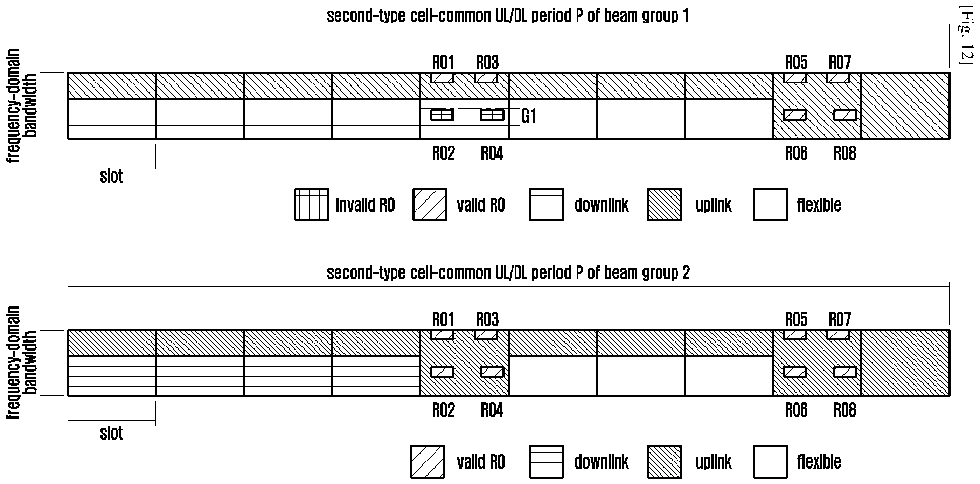

FIG. 12 illustrates another example of two beam groups. Assuming that a cell supports two beam directions, where beam 1 is one beam group and beam 2 is another beam group, that is, each beam group includes one beam. These two beam groups are configured with the second-type cell-common UL/DL information respectively. For a beam group, whether a RO is valid is determined according to the second-type cell-common UL/DL information of the beam group. It is not difficult to see that, for RO3/RO4 of the beam group 2, although they overlap with the downlink transmission frequency-domain resources of the beam group 1, since they are located in the uplink transmission resources of the beam group 2, RO3/RO4 of beam group 2 are valid ROs.

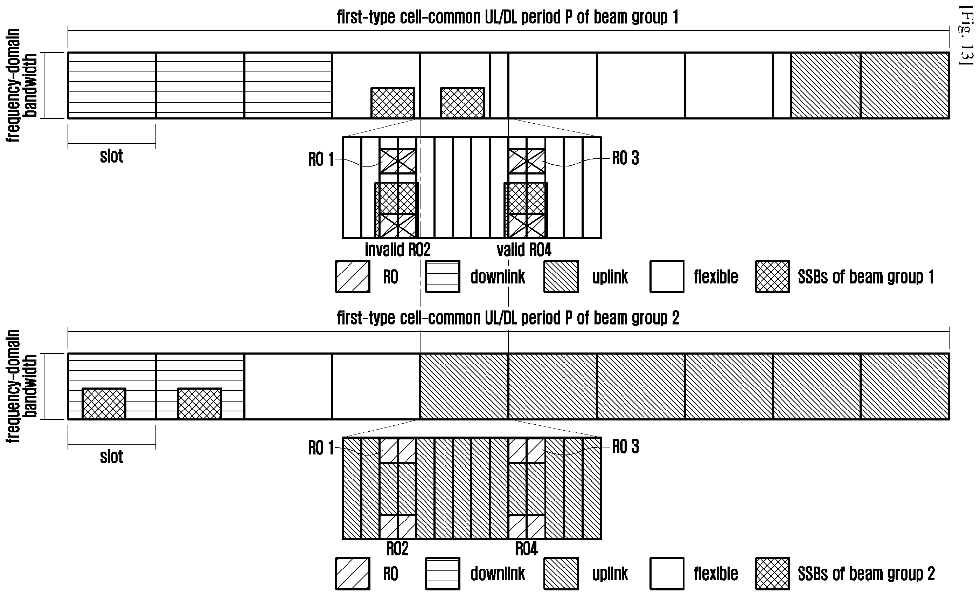

FIG. 13 illustrates another example of two beam groups. Assuming that a cell supports two beam directions, where beam 1 is one beam group and beam 2 is another beam group. These two beam groups are configured with the first-type cell-common UL/DL information respectively. For a beam group, whether a RO is valid is determined according to the first-type cell-common UL/DL information of the beam group. It is also needed to determine whether it overlaps with SSs/PBCHs or downlink transmission frequency-domain resources in another beam group. RO1/RO2 of the beam group 2 do not overlap with SSs/PBCHs of the beam group 1, so RO1/RO2 are valid. However, RO3/RO4 of the beam group 2 overlap with the SSs/PBCHs of the beam group 1, so RO3/RO4 are invalid.

According to another implementation, uplink and downlink configuration information of each beam in a beam group is configured separately. When the uplink and downlink configuration information of respective beam in a beam group is different, the downlink transmission resources in a beam cannot overlap with a union set of the uplink transmission resources of other beams in the group, or cannot overlap with the union set of the uplink transmission resources of other beams in the group and frequency-domain guard intervals. Similarly, the uplink transmission resources in a beam cannot overlap with a union set of the downlink transmission resources of other beams in the group, or cannot overlap with the union set of the downlink transmission resources of other beams in the group and frequency-domain guard intervals.

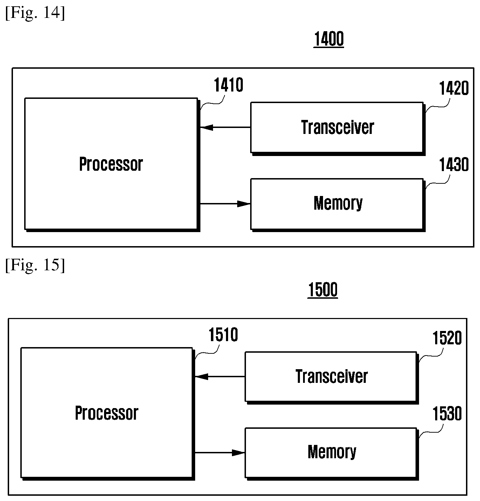

FIG. 14 illustrates a UE according to embodiments of the present disclosure.

Referring to the FIG. 14, the UE 1400 may include a processor 1410, a transceiver 1420 and a memory 1430. However, all of the illustrated components are not essential. The UE 1400 may be implemented by more or less components than those illustrated in FIG. 14. In addition, the processor 1410 and the transceiver 1420 and the memory 1430 may be implemented as a single chip according to another embodiment.

The UE 1400 may correspond to UE described above. For example, the UE 1400 may correspond to the UE in FIG. 3a.

The aforementioned components will now be described in detail.

The processor 1410 may include one or more processors or other processing devices that control the proposed function, process, and/or method. Operation of the UE 1400 may be implemented by the processor 1410.

The transceiver 1420 may include a RF transmitter for up-converting and amplifying a transmitted signal, and a RF receiver for down-converting a frequency of a received signal. However, according to another embodiment, the transceiver 1420 may be implemented by more or less components than those illustrated in components.

The transceiver 1420 may be connected to the processor 1410 and transmit and/or receive a signal. The signal may include control information and data. In addition, the transceiver 1420 may receive the signal through a wireless channel and output the signal to the processor 1410. The transceiver 1420 may transmit a signal output from the processor 1410 through the wireless channel.

The memory 1430 may store the control information or the data included in a signal obtained by the electronic device 1400. The memory 1430 may be connected to the processor 1410 and store at least one instruction or a protocol or a parameter for the proposed function, process, and/or method. The memory 1430 may include read-only memory (ROM) and/or random access memory (RAM) and/or hard disk and/or CD-ROM and/or DVD and/or other storage devices.

FIG. 15 illustrates a base station according to embodiments of the present disclosure.

Referring to the FIG. 15, the base station 1500 may include a processor 1510, a transceiver 1520 and a memory 1530. However, all of the illustrated components are not essential. The base station 1500 may be implemented by more or less components than those illustrated in FIG. 15. In addition, the processor 1510 and the transceiver 1520 and the memory 1530 may be implemented as a single chip according to another embodiment.

The base station 1500 may correspond to the gNB described in the present disclosure. For example, the base station 1500 may correspond to the gNB in FIG. 3b.

The aforementioned components will now be described in detail.

The processor 1510 may include one or more processors or other processing devices that control the proposed function, process, and/or method. Operation of the base station 1500 may be implemented by the processor 1510.

The transceiver 1520 may include a RF transmitter for up-converting and amplifying a transmitted signal, and a RF receiver for down-converting a frequency of a received signal. However, according to another embodiment, the transceiver 1520 may be implemented by more or less components than those illustrated in components.

The transceiver 1520 may be connected to the processor 1510 and transmit and/or receive a signal. The signal may include control information and data. In addition, the transceiver 1520 may receive the signal through a wireless channel and output the signal to the processor 1510. The transceiver 1520 may transmit a signal output from the processor 1510 through the wireless channel.

The memory 1530 may store the control information or the data included in a signal obtained by the base station 1500. The memory 1530 may be connected to the processor 1510 and store at least one instruction or a protocol or a parameter for the proposed function, process, and/or method. The memory 1530 may include read-only memory (ROM) and/or random access memory (RAM) and/or hard disk and/or CD-ROM and/or DVD and/or other storage devices.

The exemplary embodiments of the present application use part of the frequency-domain resources in one carrier for both uplink transmission and downlink transmission by improving the resource allocation and transmission mode of the uplink and downlink signals, thereby improving system efficiency.

Those skilled in the art will understand that the various illustrative logical blocks, modules, circuits, and steps described in this application may be implemented as hardware, software, or a combination thereof. To clearly illustrate this interchangeability of hardware and software, various illustrative components, blocks, modules, circuits, and steps are generally described above in the form of their function sets. Whether such a function set is implemented as hardware or software depends on the specific application and design constraints imposed on the overall system. Those skilled in the art can implement the described function sets in different ways for each specific application, but such design decisions should not be interpreted as causing a departure from the scope of this application.

The various illustrative logic blocks, modules, and circuits described in this application can be implemented or performed by general-purpose processors, digital signal processors (DSPs), application specific integrated circuits (ASICs), field programmable gate arrays (FPGAs) or other programmable logic devices, discrete gates or transistor logics, discrete hardware components, or any combination thereof designed to perform any combination of the functions described herein. A general-purpose processor may be a microprocessor, but in the alternative, the processor may be any conventional processor, controller, microcontroller, or state machine. The processor may also be implemented as a combination of computing devices, such as a combination of a DSP and a microprocessor, multiple microprocessors, one or more microprocessors that cooperate with a DSP core, or any other such configuration.

The steps of the method or algorithm described in this application may be directly embodied in hardware, in a software module executed by a processor, or in a combination thereof. The software module may reside in a RAM memory, flash memory, ROM memory, EPROM memory, EEPROM memory, register, hard disk, removable disk, or any other form of storage medium known in the art. An exemplary storage medium is coupled to the processor so that the processor can read and write information from/to the storage medium. In an alternative, the storage medium may be integrated into the processor. The processor and the storage medium may reside in ASIC. The ASIC may reside in the user terminal. In an alternative, the processor and the storage medium may reside in a user terminal as discrete components.

In one or more exemplary designs, the functions may be implemented in hardware, software, firmware, or any combination thereof. If implemented in software, each function may be stored on or transmitted by a computer-readable medium as one or more instructions or codes. Computer-readable medium includes both computer storage media and communication media, the latter including any medium that facilitates transfer of a computer program from one place to another. Storage media may be any available media that can be accessed by a general purpose or special purpose computer.

## Claims

1. A method performed by a user equipment, UE (116), in a communication system (100), the method comprising:
receiving (S410), from a base station (102), resource configuration information associated with at least one validation rule and information associated with random access based on a second-type configuration and associated with a UE (116) capability;
identifying (S420) one or more valid transmission occasions from transmission occasions based on the resource configuration information; and
performing (S430) random access at one or more valid transmission occasions,
wherein the one or more transmission occasions correspond to at least one of random access transmission occasions, ROs, and physical uplink shared channel transmission occasions, POs,
wherein the second-type configuration different from a first-type configuration allows different frequency domain resources in one symbol for different transmission directions, and
wherein the different transmission directions include uplink transmission direction and downlink transmission direction.

2. The method of claim 1,
wherein the validation rule further includes:
excluding physical random access channel, PRACH, resources which a distance between resources where the transmission occasions are located and a frequency-domain boundary of the downlink transmission resources for transmitting specific downlink signal is lesser than a threshold.

3. The method of claim 1,
wherein the validation rule further includes:
excluding PRACH resources which the transmission occasions are located within a time-domain guard interval between uplink and downlink transmission.

4. The method of claim 1,
wherein the validation rule further includes:
excluding PRACH resources which a distance between resources where the transmission occasions are located and a frequency-domain boundary of the downlink transmission resources is lesser than a threshold number of physical resource blocks, PRBs.

5. The method of claim 1,
wherein the validation rule further includes:
excluding PRACH resources which the transmission occasions are located within a frequency-domain guard interval between uplink and downlink transmission.

6. The method of claim 1,
wherein the resource configuration information received from the base station (102) includes at least one of time-domain uplink resource information, frequency-domain uplink resource information, time-domain downlink resource information or frequency-domain downlink resource information.

7. A user equipment, UE (116), in a communication system (100), the UE (116) comprising:
a transceiver (310); and
a controller (340) coupled with the transceiver (310) and configured to:
receive (S410), from a base station (102), resource configuration information associated with at least one validation rule and information associated with random access based on a second-type configuration and associated with a UE capability,
identify (S420) one or more valid transmission occasions from transmission occasions based on the resource configuration information, and
perform (S430) random access at one or more valid transmission occasions,
wherein the one or more transmission occasions correspond to at least one of random access transmission occasions, ROs, and physical uplink shared channel transmission occasions, POs,
wherein the second-type configuration different from a first-type configuration allows different frequency domain resources in one symbol for different transmission directions, and
wherein the different transmission directions include uplink transmission direction and downlink transmission direction.

8. The UE (116) of claim 7,
wherein the validation rule further includes:
excluding physical random access channel, PRACH, resources which a distance between resources where the transmission occasions are located and a frequency-domain boundary of the downlink transmission resources for transmitting specific downlink signal is lesser than a threshold.

9. The UE (116) of claim 7,
wherein the validation rule further includes:
excluding PRACH resources which the transmission occasions are located within a time-domain guard interval between uplink and downlink transmission.

10. The UE (116) of claim 7,
wherein the validation rule further includes:
excluding PRACH resources which a distance between resources where the transmission occasions are located and a frequency-domain boundary of the downlink transmission resources is lesser than a threshold number of physical resource blocks, PRBs.

11. The UE (116) of claim 7,
wherein the validation rule further includes:
excluding PRACH resources which the transmission occasions are located within a frequency-domain guard interval between uplink and downlink transmission.

12. The UE (116) of claim 7,
wherein the resource configuration information received from the base station (102) includes at least one of time-domain uplink resource information, frequency-domain uplink resource information, time-domain downlink resource information or frequency-domain downlink resource information

13. A method performed by a base station (102) in a communication system (100), the method including:
transmitting (S410), to a user equipment, UE (116), resource configuration information associated with at least one validation rule and information associated with random access based on a second-type configuration and associated with a UE capability; and
performing (S430) random access with the UE (116) at one or more valid transmission occasions from transmission occasions based on the resource configuration information,
wherein the one or more transmission occasions correspond to at least one of random access transmission occasions, ROs, and physical uplink shared channel transmission occasions, POs,
wherein the second-type configuration different from a first-type configuration allows different frequency domain resources in one symbol for different transmission directions, and
wherein the different transmission directions include uplink transmission direction and downlink transmission direction

14. The method of claim 13,
wherein the resource configuration information includes at least one of time-domain uplink resource information, frequency-domain uplink resource information, time-domain downlink resource information or frequency-domain downlink resource information.

15. A base station (102) in a communication system (100), the base station (102) comprising:
a transceiver (370a); and
a controller (378) coupled with the transceiver (370a) and configured to:
transmit (S410), to a user equipment, UE (116), resource configuration information associated with at least one validation rule and information associated with random access based on a second-type configuration and associated with a UE capability, and
perform (S430) random access with the UE (116) at one or more valid transmission occasions from transmission occasions based on the resource configuration information,
wherein the one or more transmission occasions correspond to at least one of random access transmission occasions, ROs, and physical uplink shared channel transmission occasions, POs,
wherein the second-type configuration different from a first-type configuration allows different frequency domain resources in one symbol for different transmission directions, and
wherein the different transmission directions include uplink transmission direction and downlink transmission direction.

## Patentansprüche

1. Verfahren, das von einem Benutzergerät, UE (116), in einem Kommunikationssystem (100) durchgeführt wird, wobei das Verfahren Folgendes umfasst:
Empfangen (S410), von einer Basisstation (102), von Ressourcenkonfigurationsinformationen, die mit mindestens einer Validierungsregel assoziiert sind, und von Informationen, die mit einem Direktzugriff basierend auf einer Konfiguration eines zweiten Typs assoziiert sind und mit einer Fähigkeit des UE (116) assoziiert sind;
Identifizieren (S420) eines oder mehrerer gültiger Übertragungsanlässe aus Übertragungsanlässen basierend auf den Ressourcenkonfigurationsinformationen; und
Durchführen (S430) des Direktzugriffs zu einem oder mehreren gültigen Übertragungsanlässen,
wobei der eine oder die mehreren Übertragungsanlässe mindestens einem von Direktzugriffsübertragungsanlässen, ROs, und Übertragungsanlässen mit gemeinsam genutztem physikalischen Uplink-Kanal, POs, entsprechen,
wobei die Konfiguration des zweiten Typs, die sich von einer Konfiguration eines ersten Typs unterscheidet, unterschiedliche Frequenzbereichsressourcen in einem Symbol für unterschiedliche Übertragungsrichtungen ermöglicht, und
wobei die unterschiedlichen Übertragungsrichtungen eine Uplink-Übertragungsrichtung und eine Downlink-Übertragungsrichtung beinhalten.

2. Verfahren nach Anspruch 1,
wobei die Validierungsregel ferner Folgendes beinhaltet:
Ausschließen von Ressourcen für einen physikalischen Direktzugriffskanal, PRACH, bei denen ein Abstand zwischen Ressourcen, an denen sich die Übertragungsanlässe befinden, und einer Frequenzbereichsgrenze der Downlink-Übertragungsressourcen zum Übertragen eines spezifischen Downlink-Signals geringer ist als ein Schwellenwert.

3. Verfahren nach Anspruch 1,
wobei die Validierungsregel ferner Folgendes beinhaltet:
Ausschließen von PRACH-Ressourcen, bei denen sich die Übertragungsanlässe innerhalb eines Zeitbereichsschutzintervalls zwischen Uplink- und Downlink-Übertragung befinden.

4. Verfahren nach Anspruch 1,
wobei die Validierungsregel ferner Folgendes beinhaltet:
Ausschließen von PRACH-Ressourcen, bei denen ein Abstand zwischen Ressourcen, an denen sich die Übertragungsanlässe befinden, und einer Frequenzbereichsgrenze der Downlink-Übertragungsressourcen geringer ist als eine Schwellenanzahl von physikalischen Ressourcenblöcken, PRBs.

5. Verfahren nach Anspruch 1,
wobei die Validierungsregel ferner Folgendes beinhaltet:
Ausschließen von PRACH-Ressourcen, bei denen sich die Übertragungsanlässe innerhalb eines Frequenzbereichsschutzintervalls zwischen Uplink- und Downlink-Übertragung befinden.

6. Verfahren nach Anspruch 1,
wobei die von der Basisstation (102) empfangenen Ressourcenkonfigurationsinformationen mindestens eines von Zeitbereichs-Uplink-Ressourceninformationen, Frequenzbereichs-Uplink-Ressourceninformationen, Zeitbereichs-Downlink-Ressourceninformationen oder Frequenzbereichs-Downlink-Ressourceninformationen beinhalten.

7. Benutzergerät, UE (116), in einem Kommunikationssystem (100), wobei das UE (116) Folgendes umfasst:
einen Transceiver (310); und
eine Steuerung (340), die mit dem Transceiver (310) gekoppelt ist und konfiguriert ist zum:
Empfangen (S410), von einer Basisstation (102), von Ressourcenkonfigurationsinformationen, die mit mindestens einer Validierungsregel assoziiert sind, und von Informationen, die mit einem Direktzugriff basierend auf einer Konfiguration eines zweiten Typs assoziiert sind und mit einer UE-Fähigkeit assoziiert sind,
Identifizieren (S420) eines oder mehrerer gültiger Übertragungsanlässe aus Übertragungsanlässen basierend auf den Ressourcenkonfigurationsinformationen, und
Durchführen (S430) des Direktzugriffs zu einem oder mehreren gültigen Übertragungsanlässen,
wobei der eine oder die mehreren Übertragungsanlässe mindestens einem von Direktzugriffsübertragungsanlässen, ROs, und Übertragungsanlässen mit gemeinsam genutztem physikalischen Uplink-Kanal, POs, entsprechen,
wobei die Konfiguration des zweiten Typs, die sich von einer Konfiguration eines ersten Typs unterscheidet, unterschiedliche Frequenzbereichsressourcen in einem Symbol für unterschiedliche Übertragungsrichtungen ermöglicht, und
wobei die unterschiedlichen Übertragungsrichtungen eine Uplink-Übertragungsrichtung und eine Downlink-Übertragungsrichtung beinhalten.

8. UE (116) nach Anspruch 7,
wobei die Validierungsregel ferner Folgendes beinhaltet:
Ausschließen von Ressourcen für einen physikalischen Direktzugriffskanal, PRACH, bei denen ein Abstand zwischen Ressourcen, an denen sich die Übertragungsanlässe befinden, und einer Frequenzbereichsgrenze der Downlink-Übertragungsressourcen zum Übertragen eines spezifischen Downlink-Signals geringer ist als ein Schwellenwert.

9. UE (116) nach Anspruch 7,
wobei die Validierungsregel ferner Folgendes beinhaltet:
Ausschließen von PRACH-Ressourcen, bei denen sich die Übertragungsanlässe innerhalb eines Zeitbereichsschutzintervalls zwischen Uplink- und Downlink-Übertragung befinden.

10. UE (116) nach Anspruch 7,
wobei die Validierungsregel ferner Folgendes beinhaltet:
Ausschließen von PRACH-Ressourcen, bei denen ein Abstand zwischen Ressourcen, an denen sich die Übertragungsanlässe befinden, und einer Frequenzbereichsgrenze der Downlink-Übertragungsressourcen geringer ist als eine Schwellenanzahl von physikalischen Ressourcenblöcken, PRBs.

11. UE (116) nach Anspruch 7,
wobei die Validierungsregel ferner Folgendes beinhaltet:
Ausschließen von PRACH-Ressourcen, bei denen sich die Übertragungsanlässe innerhalb eines Frequenzbereichsschutzintervalls zwischen Uplink- und Downlink-Übertragung befinden.

12. UE (116) nach Anspruch 7,
wobei die von der Basisstation (102) empfangenen Ressourcenkonfigurationsinformationen mindestens eines von Zeitbereichs-Uplink-Ressourceninformationen, Frequenzbereichs-Uplink-Ressourceninformationen, Zeitbereichs-Downlink-Ressourceninformationen oder Frequenzbereichs-Downlink-Ressourceninformationen beinhalten.

13. Verfahren, das von einer Basisstation (102) in einem Kommunikationssystem (100) durchgeführt wird, wobei das Verfahren Folgendes beinhaltet:
Übertragen (S410), an ein Benutzergerät, UE (116), von Ressourcenkonfigurationsinformationen, die mit mindestens einer Validierungsregel assoziiert sind, und von Informationen, die mit einem Direktzugriff basierend auf einer Konfiguration eines zweiten Typs assoziiert sind und mit einer UE-Fähigkeit assoziiert sind; und
Durchführen (S430) eines Direktzugriffs mit dem UE (116) an einem oder mehreren gültigen Übertragungsanlässen aus Übertragungsanlässen basierend auf den Ressourcenkonfigurationsinformationen,
wobei der eine oder die mehreren Übertragungsanlässe mindestens einem von Direktzugriffsübertragungsanlässen, ROs, und Übertragungsanlässen mit gemeinsam genutztem physikalischen Uplink-Kanal, POs, entsprechen,
wobei die Konfiguration des zweiten Typs, die sich von einer Konfiguration eines ersten Typs unterscheidet, unterschiedliche Frequenzbereichsressourcen in einem Symbol für unterschiedliche Übertragungsrichtungen ermöglicht, und
wobei die unterschiedlichen Übertragungsrichtungen eine Uplink-Übertragungsrichtung und eine Downlink-Übertragungsrichtung beinhalten.

14. Verfahren nach Anspruch 13,
wobei die Ressourcenkonfigurationsinformationen mindestens eines von Zeitbereichs-Uplink-Ressourceninformationen, Frequenzbereichs-Uplink-Ressourceninformationen, Zeitbereichs-Downlink-Ressourceninformationen oder Frequenzbereichs-Downlink-Ressourceninformationen beinhalten.

15. Basisstation (102) in einem Kommunikationssystem (100), wobei die Basisstation (102) Folgendes umfasst:
einen Transceiver (370a); und
eine Steuerung (378), die mit dem Transceiver (370a) gekoppelt ist und konfiguriert ist zum:
Übertragen (S410), an ein Benutzergerät, UE (116), von Ressourcenkonfigurationsinformationen, die mit mindestens einer Validierungsregel assoziiert sind, und von Informationen, die mit einem Direktzugriff basierend auf einer Konfiguration eines zweiten Typs assoziiert sind und mit einer UE-Fähigkeit assoziiert sind, und
Durchführen (S430) eines Direktzugriffs mit dem UE (116) an einem oder mehreren gültigen Übertragungsanlässen aus Übertragungsanlässen basierend auf den Ressourcenkonfigurationsinformationen,
wobei der eine oder die mehreren Übertragungsanlässe mindestens einem von Direktzugriffsübertragungsanlässen, ROs, und Übertragungsanlässen mit gemeinsam genutztem physikalischen Uplink-Kanal, POs, entsprechen,
wobei die Konfiguration des zweiten Typs, die sich von einer Konfiguration eines ersten Typs unterscheidet, unterschiedliche Frequenzbereichsressourcen in einem Symbol für unterschiedliche Übertragungsrichtungen ermöglicht, und
wobei die unterschiedlichen Übertragungsrichtungen eine Uplink-Übertragungsrichtung und eine Downlink-Übertragungsrichtung beinhalten.

## Revendications

1. Procédé exécuté par un équipement utilisateur, UE (116), dans un système de communication (100), le procédé comprenant :
recevoir (S410), d'une station base (102), des informations de configuration de ressources associées à au moins une règle de validation et des informations associées à un accès aléatoire basé sur une configuration de second type et associées à une capacité de l'UE (116) ;
identifier (S420) une ou plusieurs occasions de transmission valides parmi les occasions de transmission basées sur les informations de configuration de ressources ; et
effectuer (S430) un accès aléatoire à une ou plusieurs occasions de transmission valides,
dans lequel l'une ou les plusieurs occasions de transmission correspondent à au moins une des occasions de transmission à accès aléatoire, RO, et des occasions de transmission par canal physique partagé de liaison montante, PO,
dans lequel la configuration de second type, différente de la configuration de premier type, permet d'utiliser différentes ressources de domaine fréquentiel dans un symbole pour différentes directions de transmission, et
dans lequel les différentes directions de transmission comprennent la direction de transmission de liaison montante et la direction de transmission de liaison descendante.

2. Procédé de la revendication 1,
dans lequel la règle de validation comprend en outre:
exclure des ressources de canal d'accès aléatoire physique, PRACH, dont une distance entre les ressources où sont situées les occasions de transmission et une limite de domaine fréquentiel des ressources de transmission de liaison descendante pour la transmission d'un signal de liaison descendante spécifique est inférieure à un seuil.

3. Procédé de la revendication 1,
dans lequel la règle de validation comprend en outre:
exclure des ressources PRACH dont les occasions de transmission sont situées dans un intervalle de garde de domaine temporel entre la transmission de liaison montante et la transmission de liaison descendante.

4. Procédé de la revendication 1,
dans lequel la règle de validation comprend en outre:
exclure des ressources PRACH dont une distance entre les ressources où sont situées les occasions de transmission et une limite de domaine fréquentiel des ressources de transmission de liaison descendante est inférieure à un nombre de seuil des blocs de ressource physique, PRB.

5. Procédé de la revendication 1,
dans lequel la règle de validation comprend en outre:
exclure des ressources PRACH dont les occasions de transmission sont situées dans un intervalle de garde de domaine fréquentiel entre la transmission de liaison montante et la transmission de liaison descendante.

6. Procédé de la revendication 1,
dans lequel les informations de configuration de ressources reçues de la station de base (102) comprennent au moins l'une des informations de ressource de liaison montante de domaine temporel, des informations de ressource de liaison montante de domaine fréquentiel, des informations de ressource de liaison descendante de domaine temporel ou des informations de ressource de liaison descendante de domaine fréquentiel.

7. Équipement utilisateur, UE (116), dans un système de communication (100), l'UE (116) comprenant :
un émetteur-récepteur (310) ; et
une commande (340), couplée à l'émetteur-récepteur (310) et configurée pour :
recevoir (S410), d'une station base (102), des informations de configuration de ressources associées à au moins une règle de validation et des informations associées à un accès aléatoire basé sur une configuration de second type et associées à une capacité de l'UE,
identifier (S420) une ou plusieurs occasions de transmission valides parmi les occasions de transmission basées sur les informations de configuration de ressources, et
effectuer (S430) un accès aléatoire à une ou plusieurs occasions de transmission valides,
dans lequel l'une ou les plusieurs occasions de transmission correspondent à au moins une des occasions de transmission à accès aléatoire, RO, et des occasions de transmission par canal physique partagé de liaison montante, PO,
dans lequel la configuration de second type, différente de la configuration de premier type, permet d'utiliser différentes ressources de domaine fréquentiel dans un symbole pour différentes directions de transmission, et
dans lequel les différentes directions de transmission comprennent la direction de transmission de liaison montante et la direction de transmission de liaison descendante.

8. UE (116) de la revendication 7,
dans lequel la règle de validation comprend en outre :
exclure des ressources de canal d'accès aléatoire physique, PRACH, dont une distance entre les ressources où sont situées les occasions de transmission et une limite de domaine fréquentiel des ressources de transmission de liaison descendante pour la transmission d'un signal de liaison descendante spécifique est inférieure à un seuil.

9. UE (116) de la revendication 7,
dans lequel la règle de validation comprend en outre :
exclure des ressources PRACH dont les occasions de transmission sont situées dans un intervalle de garde de domaine temporel entre la transmission de liaison montante et la transmission de liaison descendante.

10. UE (116) de la revendication 7,
dans lequel la règle de validation comprend en outre :
exclure des ressources PRACH dont une distance entre les ressources où sont situées les occasions de transmission et une limite de domaine fréquentiel des ressources de transmission de liaison descendante est inférieure à un nombre de seuil des blocs de ressource physique, PRB.

11. UE (116) de la revendication 7,
dans lequel la règle de validation comprend en outre :
exclure des ressources PRACH dont les occasions de transmission sont situées dans un intervalle de garde de domaine fréquentiel entre la transmission de liaison montante et la transmission de liaison descendante.

12. UE (116) de la revendication 7,
dans lequel les informations de configuration de ressources reçues de la station de base (102) comprennent au moins l'une des informations de ressource de liaison montante de domaine temporel, des informations de ressource de liaison montante de domaine fréquentiel, des informations de ressource de liaison descendante de domaine temporel ou des informations de ressource de liaison descendante de domaine fréquentiel.

13. Procédé exécuté par une station de base (102) dans un système de communication (100), le procédé comprenant :
transmettre (S410), à un équipement utilisateur, UE (116), des informations de configuration de ressources associées à au moins une règle de validation et des informations associées à un accès aléatoire basé sur une configuration de second type et associées à une capacité de l'UE ; et
effectuer (S430) un accès aléatoire avec l'UE (116) à une ou plusieurs occasions de transmission valides parmi les occasions de transmission basées sur les informations de configuration de ressources,
dans lequel l'une ou les plusieurs occasions de transmission correspondent à au moins une des occasions de transmission à accès aléatoire, RO, et des occasions de transmission par canal physique partagé de liaison montante, PO,
dans lequel la configuration de second type, différente de la configuration de premier type, permet d'utiliser différentes ressources de domaine fréquentiel dans un symbole pour différentes directions de transmission, et
dans lequel les différentes directions de transmission comprennent la direction de transmission de liaison montante et la direction de transmission de liaison descendante.

14. Procédé de la revendication 13,
dans lequel les informations de configuration de ressources comprennent au moins l'une des informations de ressource de liaison montante de domaine temporel, des informations de ressource de liaison montante de domaine fréquentiel, des informations de ressource de liaison descendante de domaine temporel ou des informations de ressource de liaison descendante de domaine fréquentiel.

15. Station de base (102) dans un système de communication (100), la station de base (102) comprenant :
un émetteur-récepteur (370a) ; et
une commande (378), couplée à l'émetteur-récepteur (370a) et configurée pour :
transmettre (S410), à un équipement utilisateur, UE (116), des informations de configuration de ressources associées à au moins une règle de validation et des informations associées à un accès aléatoire basé sur une configuration de second type et associées à une capacité de l'UE, et
effectuer (S430) un accès aléatoire avec l'UE (116) à une ou plusieurs occasions de transmission valides parmi les occasions de transmission basées sur les informations de configuration de ressources,
dans laquelle l'une ou les plusieurs occasions de transmission correspondent à au moins une des occasions de transmission à accès aléatoire, RO, et des occasions de transmission par canal physique partagé de liaison montante, PO,
dans laquelle la configuration de second type, différente de la configuration de premier type, permet d'utiliser différentes ressources de domaine fréquentiel dans un symbole pour différentes directions de transmission, et
dans laquelle les différentes directions de transmission comprennent la direction de transmission de liaison montante et la direction de transmission de liaison descendante.
